# EUROPÄISCHE PATENTSCHRIFT

(11) **EP 4 584 210 B1**
(45) Veröffentlichungstag und Bekanntmachung des Hinweises auf die Patenterteilung: **22.04.2026**
(21) Anmeldenummer: 23768230.7
(22) Anmeldetag: 06.09.2023
(51) Int. Cl.: B67D 7/02, B25J 1/00, B61D 5/00, B61D 39/00, B65G 67/00, B67D 7/04, F17C 1/00, B25J 11/00

(54) **LOGISTIKSYSTEM ZUM AUTOMATISCHEN UMSCHLAG MINDESTENS EINES FLUIDEN MEDIUMS**
LOGISTICS SYSTEM FOR AUTOMATICALLY TURNING OVER AT LEAST ONE FLUID MEDIUM
SYSTÈME LOGISTIQUE POUR LE TRANSBORDEMENT AUTOMATIQUE D'AU MOINS UN MILIEU FLUIDE

(30) Priorität: 07.09.2022 EP 22194401
(43) Veröffentlichungstag der Anmeldung: 16.07.2025
(73) Patentinhaber: BASF SE, 67056 Ludwigshafen am Rhein (DE)
(72) Erfinder: BIHL, Ralf, 67056 Ludwigshafen am Rhein (DE); BIEKER, Thorsten, 67056 Ludwigshafen am Rhein (DE); CALLAU MONJE, Simon Fernando Magnus, 67056 Ludwigshafen am Rhein (DE); SIMGEN, Manuel, 67056 Ludwigshafen am Rhein (DE); SCHMIERS, Holger, 67269 Gruenstadt (DE)
(74) Vertreter: BASF IP Association
(86) Internationale Anmeldenummer: PCT/EP2023/074462
(87) Internationale Veröffentlichungsnummer: WO 2024/052410

(56) Entgegenhaltungen:
- CN-A- 107 298 424
- CN-A- 111 573 608
- CN-A- 114 455 531
- JP-A- H09 286 498

## Beschreibung

### Technisches Gebiet

Die vorliegende Erfindung betrifft Logistiksystem zum automatischen Umschlag mindestens eines fluiden Mediums und ein Verfahren zum Umschlag mindestens eines fluiden Mediums.

### Technischer Hintergrund

In vielen technischen Bereichen werden mobile Tanks vor- oder nach einem Transport oder einer Lagerung be- oder entladen. Diese Be- und Entladung findet an einer sogenannten Umschlagsstelle statt. Dies ist eine Vorrichtung, an der mobile Tanks be- oder entladen werden können. Das Produkt zur Beladung kommt entweder aus einem oder mehreren stationären Tanks, anderen mobilen Tanks oder aus Pipelines, die wiederum an Produktionen angeschlossen sein können. Bei der Entladung geht das Produkt entsprechend in stationäre Tanks, andere mobile Tanks oder über Pipelines direkt zu Verbrauchern.

Der Be- und Entladungsvorgang wird heute manuell von Mitarbeitern durchgeführt. Hierzu bestellen die Mitarbeiter einen mobilen Tank an die Umschlagsstelle. Dann wird der mobile Tank an die Umschlagstelle angeschlossen. Hierzu werden Rohre oder Schläuche mit den Armaturen am mobilen Tank verbunden. Bei mobilen Tanks, die alle Öffnungen und Ventile oberhalb des Flüssigkeitsspiegels haben, erfolgt der Anschluss an den oberen Armaturen. Bei mobilen Tanks, die auch Öffnungen unterhalb des Flüssigkeitsspiegels haben, kann der Anschluss oben oder unten erfolgen. Hierzu werden in der Regel mindestens zwei Verbindungen aufgebaut eine Leitung, durch die das Produkt fließen soll und eine zweite Leitung, über die die Gase gependelt werden sollen. Bei ungefährlichen Produkten kann ggf. auf das Gaspendeln verzichtet werden, jedoch muss dann durch Öffnen einer oberen Armatur ein Druckausgleich hergestellt werden. Dieser Anschlussvorgang erfolgt jeweils am Anfang der Be- oder Entladung und entsprechend ein zweites Mal nach erfolgter Be- und Entladung. Die Anschlussvorgänge werden ggf. aufgrund des relativ hohen Gewichts der Rohre bzw. Schläuche, teilweise mit Kupplungen oder Flanschen versehen, über mechanische/hydraulische/pneumatische Systeme wie Gelenkverladearme unterstützt. Weitere Tätigkeiten, die das Verladepersonal ausüben, sind die Überwachung während des Füllvorgangs und die Dokumentation der Tätigkeit in Checklisten. Auch überwacht der Mitarbeiter vor Ort, dass es nicht zu einer Überfüllung kommt. Hierzu setzt er entweder eine Waage ein, einen Durchflusszähler oder einen ebenfalls manuell anzuschließenden Füllstanzmesser.

Trotz der zahlreichen Vorteile der aus dem Stand der Technik bekannten Logistiksystemen mit Umschlagstelle beinhalten diese noch Verbesserungspotenzial. So ist bei vielen Umschlagstellen das für die oben beschriebenen Tätigkeiten zur Verfügung stehende Personal der Engpass.

Weiterhin mangelt es an Flexibilität. Daher werden viele Umschlagsstellen nicht optimal betrieben, da beispielsweise nur tagsüber oder in erweiterter Tagschicht an der Umschlagsstelle gearbeitet wird. Auch auf Fluktuationen können manuell betriebene Umschlagsstellen nur schlecht reagieren.

Die CN 111 573 608 A offenbart ein Logistiksystem zum automatischen Umschlag eines fluiden Mediums, umfassend eine Umschlagstelle, eine Steuerung und ein Bewegungssystem.

### Aufgabe der Erfindung

Es wäre daher wünschenswert, ein Logistiksystem und ein Verfahren zum Umschlag mindestens eines fluiden Mediums bereitzustellen, welche die Nachteile bekannter Logistiksysteme zumindest weitgehend vermeiden. Insbesondere soll der Umschlag automatisch erfolgen, so dass durch Automation der Prozess des Umschlags komplett automatisiert werden kann und hierdurch die Umschlagsstelle flexibel mal mit hohen und mal mit einer niedrigeren Anzahl von zu be- und entladenden mobilen Tanks betrieben werden kann. Hierdurch werden auch Absicherungskonzepte erst möglich bei denen z.B. die Hälfte der Produkte mit einem Verkehrsträger, wie beispielweise Binnenschiff, und die andere Hälfte mit einem anderen Verkehrsträger, wie beispielsweise Bahn, transportiert werden sollen. Kommt es bei einem Verkehrsträger zu Engpässen, wie beispielsweise Niedrigwasser bei der Binnenschifffahrt, kann so flexibel auf einen anderen Verkehrsträger gewechselt werden, was nur möglich ist, wenn durch Automatisierung das Verladepersonal nicht der Engpass ist.

Es wäre auch wünschenswert Verladungen zu automatisieren, bei denen das Verladepersonal bei ungeplanter (ungewollter) Freisetzung des fluiden Mediums durch den Austritt des fluiden Mediums stark geschädigt würde. Durch die Automatisierung wären keine Menschen im direkten Gefahrenbereich und damit könnte eine Gefährdung von Menschen ausgeschlossen oder reduziert werden.

Es wäre auch wünschenswert Verladungen zu automatisieren, da im Falle eines Unfalls oder unbeabsichtigten Freisetzung des fluiden Mediums das Verfahren geeignet ist den Tank auch während der bereits begonnenen Notfallmaßnahmen zu verschließen und ggf. auch aus der Gefahrenzone durch ein automatisches Transportsystem abtransportieren zu lassen und so das Risiko oder die Auswirkungen eines Unfalls zu reduzieren. Im Falle von nicht automatisierten von durch Menschen durchgeführten Verladungen ist dies hingegen nicht möglich, da die Menschen im Gefahrenfall zuerst evakuiert würden. So könnte mittels des vorgeschlagenen Verfahrens ein nicht am Unfall / Vorfall beteiligter mobiler Tank vom vorgeschlagenen System geschlossen werden und aus der Gefahrenzone raustransportiert werden. Damit würden die Auswirkungen eines möglichen Übergreifens des Unfalls Norfalls (z.B. Feuer) auf den bisher nicht betroffenen mobilen Tank vermieden werden und damit die Auswirkungen von Unfällen durch die vorgeschlagene Erfindung reduziert werden.

### Allgemeine Beschreibung der Erfindung

Diese Aufgabe wird adressiert durch ein Logistiksystem und ein Verfahren zum Umschlag mindestens eines fluiden Mediums mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein Logistiksystem zum automatischen Umschlag mindestens eines fluiden Mediums vorgeschlagen.

Der Begriff "Logistiksystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein System beziehen, das der raum-, zeit-, art- und mengenmäßigen Veränderung von Gütern dient. Entsprechend kann ein Logistiksystem ein Transport-, Lager- und/oder Kommissioniersystem umfassen, um diese Funktion zu erfüllen. Unterstützt wird der gesamte Güterfluss durch die im Verpackungssystem stattfindenden Verpackungsprozesse, durch die das Transportieren, Lagern und Kommissionieren erleichtert oder oftmals gar erst ermöglicht wird. Informationen, also immaterielle Güter, lösen den gesamten (materiellen) Güterfluss aus. Der Informationsfluss, der bei der organisatorischen Gestaltung von großer Bedeutung ist, verläuft parallel zur logistischen Kette und korrespondiert mit dem Materialfluss. Jedes Logistiksystem ist durch das Zusammenspiel von Bewegungs- und Speicherprozessen gekennzeichnet. Durch ein Netzwerk von Knoten (Speicher, Lager) und Kanten (Bewegungen) werden Objekte (Güter, Energie, Informationen, Menschen) geführt. Zwischen Quelle (Lieferpunkt) und Senke (Empfangspunkt) sind unterschiedliche Verbindungsstrukturen möglich. In einstufigen Logistiksystemen besteht ein direkter Güterfluss zwischen Lieferpunkt (Quelle) und Empfangspunkt (Senke). Bei mehrstufigen Logistiksystemen besteht ein indirekter Güterfluss - wird durch mindestens einen weiteren Knoten unterbrochen, an dem zusätzliche Speicherprozesse und/oder Bewegungsprozesse stattfinden. In einem Auflösepunkt treffen die Güter in großen Mengen vom Lieferpunkt aus ein und verlassen ihn in kleinen Mengen hin zu verschiedenen Empfangspunkten. Das Auflösen besteht entweder in einer reinen Verkleinerung der Mengen eines bestimmten Gutes oder in einem Zusammenstellen (Assortieren, Kommissionieren) von Gütern nach Menge und Sorte (Beispiel: Ein Möbelhersteller unterhält regionale Auslieferungslager für die Belieferung des Einzelhandels). In mehrstufigen Logistiksystemen tritt häufig ein Kombinierter Verkehr auf, der mit unterschiedlichen Transportmitteln durchgeführt wird. In einem Konzentrationspunkt treffen kleinere Mengen aus mehreren Lieferpunkten aus ein und verlassen ihn in großen Mengen hin zu einem Empfangspunkt. Kombinierte Logistiksysteme beinhalten schließlich direkte und indirekte Güterflüsse nebeneinander.

Der Begriff "Umschlag" und seine grammatikalischen Äquivalente, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Wechsel des Transportmittels und/oder des Transportweges und/oder Lagermittels innerhalb einer Liefer- oder Transportkette beziehen. Beim Umschlag handelt es sich um die Aufnahme eines Transportgutes in ein Transportmittel (Verladung) und/oder die Entladung aus einem Transportmittel (Abladung). Der Umschlag umfasst alle Förder- und Lagervorgänge beim Übergang eines Transportgutes auf ein Verkehrs- oder Transportmittel, beim Abgang der Güter und deren Wechsel des Transportmittels. Deshalb ist auch die Überführung von Gütern aus dem Lager in das Transportmittel und umgekehrt ein Umschlag. Der Umschlag ist ein Vorgang, bei dem Güter das Transportmittel wechseln wie es beim kombinierten Verkehr erforderlich ist. Beispielsweise wechselt das Frachtgut beim Vorlauf von einem Lastkraftwagen am Hafen für den Hauptlauf auf ein Frachtschiff oder am Güterbahnhof auf einen Güterzug, um im Nachlauf wieder von einem Empfangsspediteur zum Empfänger transportiert zu werden. Die Begriffe Be- und Entladen werden insbesondere synonym zum Umschlag gebraucht oder stehen für das Verladen. Weiterhin werden zum Umschlagen auch noch das Sortieren, Einlagern, Auslagern und Kommissionieren hinzugezählt. In DIN 30781-1, in der am Anmeldetag der vorliegenden Patentanmeldung gültigen Fassung, wird das Umschlagen definiert als "Gesamtheit der Förder- und Lagervorgänge beim Übergang der Güter auf ein Transportmittel, beim Abgang der Güter von einem Transportmittel und wenn Güter das Transportmittel wechseln." Der Umschlag kann manuell, maschinell oder automatisch durchgeführt werden. Die Umschlagleistung ist die Menge der pro Zeiteinheit (z. B. Jahr, Monat, Tag, Stunde) umgeschlagenen Güter. Die Umschlagrate gibt an, wie oft der mittlere Jahresbestand eines Lagers umgeschlagen wird (Lagerumschlagshäufigkeit). Der Bestand kann dabei wertmäßig (z. B. in Euro) oder mengenmäßig (z. B. in Tonnen) angegeben werden.

Der Begriff "fluides Medium", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Substanzen beziehen, die sich unter dem Einfluss von Scherkräften kontinuierlich verformen, d. h. fließen. Insbesondere umfasst der Begriff außer Materie im flüssigen und gasförmigen Aggregatzustand, d.h. Gase und Flüssigkeiten, auch Plasma, Suspensionen und Aerosole.

Das Logistiksystem umfasst mindestens eine Umschlagstelle.

Der Begriff "Umschlagstelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einrichtung oder Vorrichtung zum Umschlagen beziehen. Mit anderen Worten ist eine Umschlagstelle eine technische Anlage, mit der der Umschlag durchgeführt wird. Die Umschlagstelle umfasst entsprechend Umschlaggeräte. Der Begriff ist daher nicht zu verwechseln mit dem Umschlagpunkt. So wird der Ort des Umschlages Umschlagpunkt genannt. Der Umschlagpunkt kann sich innerhalb eines Betriebsgeländes befinden als Teil des innerbetrieblichen Materialflusses (Intralogistik). Er kann auch die Schnittstelle zwischen dem inner- und dem außerbetrieblichen Transport sein, zum Beispiel, wenn Waren vom Fertigteilelager auf einem LKW geladen und zu Kunden transportiert werden.

Die Umschlagstelle ist eingerichtet, um mindestens einen Vorgang durchzuführen ausgewählt aus der Gruppe bestehend aus einem Beladen eines mobilen Tanks mit dem fluiden Medium und einem Entladen des fluiden Mediums aus dem mobilen Tank. Es wird explizit betont, dass das Beladen und Entladen des mobilen Tanks als separate Vorgänge ausgeführt werden können. Alternativ kann das Beladen und Entladen des mobilen Tanks gleichzeitig erfolgen. Beispielsweise kann an eine Stelle des mobilen Tanks ein Beladen und an einer anderen Stelle ein Entladen erfolgen. Auch die Realisierung einer Kreislaufströmung des fluiden Mediums ist durch gleichzeitiges Beladen und Entladen möglich. Eine solche Kreislaufströmung kann beispielsweise realisiert werden, um bestimmte physikalische oder chemische Eigenschaften des fluiden Mediums einzustellen, wie beispielsweise Temperatur, Druck, Aggregatzustand des fluiden Mediums.

Der Begriff "mobiler Tank", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einrichtung oder Vorrichtung zum vorübergehenden Lagern oder Aufbewahren eines fluiden Mediums beziehen, die beweglich und insbesondere transportabel ist. Bei dem mobilen Tank kann es sich insbesondere um ein bewegliches Gefäß oder Behälter handeln. Ein derartiger mobiler Tank kann mittels eines Lastkraftwagen, einer Eisenbahn, eines Schiffs oder eines Flugzeugs transportiert werden.

Die Umschlagstelle weist mindestens ein Rohrsystem mit mindestens einem Rohranschluss auf.

Der Begriff "Rohrsystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einrichtung oder Vorrichtung beziehen, die aus Rohren, Rohranschlüssen oder -verbindungen und den zugehörigen Armaturen besteht. Ein Rohrsystem dient dem Transport von Fluiden und riesel- oder pumpfähigen Feststoffen sowie der Übertragung von mechanischer und thermischer Energie.

Der Begriff "Rohranschluss", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Bauteil beziehen, das zum Koppeln von Rohr- und Schlauchleitungen sowie zum Anschluss von Armaturen, Pumpen und ähnlichem eingerichtet ist. Rohranschlüsse können auch als Rohrverbindungen bezeichnet werden. Rohranschlüsse dienen in der Regel zugleich zum Abdichten und zur konstruktiven Verbindung, d. h. zum Ausrichten der verbundenen Elemente und zum Weiterleiten von Kräften. Verbindungen durch Schraubfittings und Formstücke können später wieder gelöst werden. Verschraubungen und Manschettenverbindungen können gelöst werden, ohne die Rohre dabei zu dislozieren. Rohrverbindungen werden nach betrieblichen Anforderungen (Lösbarkeit der Verbindung), Betriebsbedingungen (Druck und Temperatur), Medium und Werkstoff von Rohrabschnitten und Formstücken (Schweißbarkeit) ausgewählt. Rein konstruktive Rohrverbinder ohne abdichtende Funktion werden als Rohrverbindungselement bezeichnet.

Das Logistiksystem umfasst weiterhin mindestens eine Steuerung.

Der Begriff "Steuerung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Bauteil beziehen, das zur Beeinflussung des Verhaltens eines Systems eingerichtet ist. Durch Steuerung wird ein System in einen anderen Zustand gebracht. Die Änderung des Systemverhaltens geschieht durch Information, Nachricht, Reiz oder Input. Insbesondere ist eine Steuerung eingerichtet, eine gerichtete Beeinflussung des Verhaltens technischer Systeme, wie beispielsweise Geräte, Apparate, Maschinen, Anlagen und biologische Systeme, zu bewirken. Üblicherweise ist eine Steuerung eine elektronische Einheit.

Die Steuerung ist programmtechnisch eingerichtet, um mindestens eine Funktion des Logistiksystems zu steuern.

Das Logistiksystem umfasst weiterhin mindestens ein Bewegungssystem mit mindestens einem Bewegungsarm und einem automatischen Kupplungssystem.

Der Begriff "Bewegungssystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein System beziehen, das eine Maschine oder ein Bauteil bewegt. Die Bewegung kann dabei elektrisch, elektronisch, mechanisch, elektromechanisch oder in anderer Weise bewirkt werden, beispielsweise durch einen oder mehrere Motoren, Aktoren oder eine Kombination derselben. Bei der bewegten Maschine kann es sich um eine Werkzeugmaschine, ein Bauteil einer Maschine, eine Vorrichtung, ein Gerät und/oder eine Anlage handeln. Insbesondere kann es sich bei dem Bewegungssystem um ein Portalsystem, eine Werkzeugmaschine mit einem Gantry-Antrieb und/oder Robotersystem handeln.

Der Begriff "Bewegungsarm", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen armförmigen Bewegungsmechanismus beziehen. Der Bewegungsarm kann dabei eine lineare Bewegung, d. h. mit einem Freiheitsgrad, oder eine Bewegung mit mehreren Freiheitsgraden durchführen. In letzterem Fall umfasst der Bewegungsarm ein oder mehrere Gelenke. Beispielsweise ist der Bewegungsarm als Roboterarm ausgebildet. Auf diese Weise sind sowohl lineare Bewegungen als auch Drehbewegungen realisierbar.

Der Begriff "Kupplungssystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen ein System mit mindestens einem Kupplungsstück und weiteren Bauteilen beziehen. So umfasst das Kupplungssystem insbesondere ein Kupplungsstück und ein Rohr und/oder einen Schlauch und/oder ein oder mehrere Ventile. Das Kupplungsstück kann ein sogenanntes Mutter- oder Vaterkupplungsstück sein.

Eine Kupplung bezieht sich dabei insbesondere auf eine lösbare Verbindung zwischen Segmenten von Transportleitungen, wie beispielsweise Rohrleitungen, Schläuchen oder dergleichen. Sie ermöglichen ein rationelles und zuverlässiges Anschließen und Auswechseln von Systemen, Aggregaten, Geräten etc. Die Bauform ist abhängig vom Verwendungszweck, dem in der Transportleitung geförderten Medium (Luft, Gase, Wasser, Öl, Säure etc.) sowie von den in der Transportleitung herrschenden Druckverhältnissen (Vakuum oder Überdruck). Eine Kupplung setzt sich insbesondere aus zwei miteinander verbindbaren Kupplungsstücken zusammen, d. h. dem Mutterkupplungsstück und Vaterkupplungsstück.

Der Bewegungsarm ist zum Bewegen des Kupplungssystems eingerichtet. Die Bewegung kann dabei durch eine Bewegung des Bewegungsarms bewirkt werden. Zu diesem Zweck kann der Bewegungsarm permanent oder lösbar mit dem Kupplungssystem verbindbar sein.

Das automatische Kupplungssystem ist eingerichtet, um mindestens einen Tankstutzen des mobilen Tanks automatisch zu öffnen. Das automatische Kupplungssystem ist weiterhin eingerichtet, um den Rohranschluss der Umschlagstelle automatisch zu öffnen. Das automatische Kupplungssystem ist weiterhin eingerichtet, um den Tankstutzen und den Rohranschluss fluidisch zu verbinden.

Der Begriff "automatisch", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, der ohne manuelle oder weitere Tätigkeit bei Durchführung eines einzigen Arbeitsschritts abläuft. So wird beispielsweise der Tankstutzen geöffnet sobald das Kupplungssystem mit diesem verbunden ist, ohne dass es eines weiteren Arbeitsschritts erfordert.

Der Begriff "fluidisch verbunden", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Zustand beziehen, der eine Durchströmung durch das fluide Medium erlaubt.

Das erfindungsgemäße Logistiksystem erlaubt durch Automation das Be- und/oder Entladen komplett zu automatisieren und hierdurch die Umschlagsstellen flexibel mal mit hohen und mal mit einer niedrigeren Anzahl von zu be- und entladenden mobilen Tanks zu betreiben. Hierdurch werden auch Absicherungskonzepte erst möglich bei denen z.B. die Hälfte der Produkte mit einem Verkehrsträger, wie z.B. Binnenschiff, und die andere Hälfte mit einem anderen Verkehrsträger, wie z.B. Bahn, transportiert werden sollen. Kommt es bei einem Verkehrsträger zu Engpässen, wie z.B. Niedrigwasser bei der Binnenschifffahrt, kann so flexibel auf den anderen Verkehrsträger gewechselt werden. Dies ist möglich, da durch Automatisierung das Verladepersonal keinen Engpass bilden kann. Das Logistiksystem umfasst dabei den gesamten Prozess von der Bestellung, über die Anlieferung, der Positionierung unter der Umschlagsstelle, dem Anschluss an die Umschlagsstelle, dem Entladevorgang bzw. Beladevorgang, der Festlegung des korrekten Be- oder Entladegewichts, der Überwachung während der Be- und Entladung, dem Abschließen des mobilen Tanks nach erfolgter Be-und Entladung, der Abmeldung des mobilen Tanks und dem Rücktransport des mobilen Tanks.

Die Steuerung kann eingerichtet sein, um die fluidische Verbindung zwischen dem Tankstutzen und dem Rohranschluss freizuschalten oder zu blockieren. Somit kann die Steuerung eine Durchströmung der Verbindung zwischen dem Tankstutzen und dem Rohranschluss erlauben oder verhindern.

Das Logistiksystem kann weiterhin mindestens eine Analysevorrichtung zur Erfassung mindestens eines Parameters des fluiden Mediums umfassen.

Der Begriff "Analysevorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, die eingerichtet ist, mindestens eine vorbestimmte Eigenschaft eines Stoffes oder Stoffgemisches zu erfassen und/oder zu untersuchen. Insbesondere kann eine solche Vorrichtung eingerichtet sein, eine systematische Untersuchung durchzuführen, bei der das untersuchte Objekt in seine Bestandteile (Elemente) zerlegt wird. Diese Elemente werden dabei auf der Grundlage von Kriterien erfasst und anschließend geordnet, untersucht und ausgewertet. Insbesondere betrachtet man Beziehungen und Wirkungen (oft: Interdependenzen) zwischen den Elementen.

So ist das Logistiksystem in der Lage den benötigten Bedarf zu ermitteln, mobile Tanks für die Be- oder Entladung abzurufen (bestellen), einen Transport zu überwachen und bei Anlieferung die Anlieferung zu koordinieren, den Tank anzuschließen, den Inhalt des Tanks zu überprüfen und freizugeben, die Beladung zu starten, überwachen und abzuschließen und schließlich den Tank für die Abholung abzumelden.

Die Steuerung kann eingerichtet sein, um den mindestens einen Parameter mit mindestens einer Vorgabe zu vergleichen und entsprechend dem Ergebnis des Vergleichs die fluidische Verbindung zwischen dem Tankstutzen und dem Rohranschluss freizuschalten oder zu blockieren. Mit anderen Worten kann die Steuerung überprüfen, ob das fluide Medium einer Spezifikation entspricht, und ein Beladen oder Entladen zu erlauben oder zu verhindern. Beispielsweise wird das Produkt auf Korrektheit und Reinheit geprüft. Nach erfolgter Qualitätsfreigabe wird die Leitung auf den angeschlossenen stationären Tank, anderen mobilen Tank oder Pipeline zum Verbraucher geschaltet und der Tank entleert.

Der Parameter kann ausgewählt sein aus der Gruppe bestehend aus: einer chemischen Eigenschaft des fluiden Mediums; einer Reinheit des fluiden Mediums; einer physikalischen Eigenschaft des fluiden Mediums; einer Art des fluiden Mediums; einer Füllmenge des fluiden Mediums innerhalb des mobilen Tanks. Die chemische Eigenschaft des fluiden Mediums kann insbesondere die Löslichkeit, die Reaktivität, die pH-Konstanten (Säure- und/oder Basenkonstante), die Enthalpiewerte (Verbrennungsenthalpie, und dergleichen umfassen. Die chemische Eigenschaft des fluiden Mediums kann beispielsweise charakteristische chemische Reaktion(en) mit einem anderen fluidischen Verbindung, Farbänderung durch chemische oder physikalische Interaktion mit einem Indikator, Enthalpie der fluidischen Verbindung, charakteristische detektierbare chemische, physikalische oder quantenchemische Übergänge infolge z.B. von Energieeinstrahlungen umfassen. Die physikalische Eigenschaft des fluiden Mediums kann beispielsweise Druck, Temperatur, Dichtigkeit der fluidischen Verbindung, Druckverlust der fluidischen Verbindung, Stoffdichte, Aggregatzustand, elektrische Leitfähigkeit, Viskosität, Emissions- /Absorptionsspektrum, Brechungsindizes, Siedepunkt der fluidischen Verbindung, Brechungsindex der fluidischen Verbindung, Farbe der fluidischen Verbindung, osmotische Eigenschaften der fluidischen Verbindung oder Dampfdruck der fluidischen Verbindung umfassen.

Die Steuerung kann eingerichtet sein, um einen Bedarf eines Umschlags des fluiden Mediums zu erfassen. Die Steuerung kann weiterhin eingerichtet sein, um entsprechend des Bedarfs automatisch mindestens einen mobilen Tank für den Umschlag anzufordern und an der Umschlagstelle bereitzustellen.

Die Anforderung des mobilen Tanks kann dabei durch einen entsprechenden Auftrag erfolgen. Der Auftrag geht beispielsweise an ein vollautomatisches Lager für mobile Tanks oder an einem in Transport befindlichen Tank. Hierbei wird der Auftrag erteilt, einen entsprechenden mobilen Tank an die Umschlagsstelle zu bringen. Im vollautomatisierten Fall wird der entsprechende mobile Tank im Tankcontainerlager von einem automatischen Kran gepickt und auf einen bereitgestellten AGV-Rahmen verladen. Dieser wird über einen von der Steuerung zu setzenden Auftrag mit einem AGV (automatisches Transportsystem für mobile Tanks) zur Ladestelle gefahren. Das AGV positioniert dabei den Tank exakt unter der Umschlagsstelle, so dass der mobile Tank automatisch angeschlossen werden kann. In nicht vollständig automatisierten Systemen erfolgt die Positionierung an der Ladestelle per Orientierungsmarke durch einen Fahrer, wie beispielsweise an einem Tankzug, TC (Tankcontainer) oder BTC (BASF Class Tank Container) auf LKW-Chassis, durch einen Lokführer, wie beispielsweise an einem Kesselwagen, Tankcontainer oder BTC auf Tragwagen, oder durch den Kapitän, wie beispielsweise eines Binnentankschiffs. Nach der Positionierung und Erkennung des mobilen Tanks durch die Steuerung, gibt die Steuerung dem Bewegungssystem den Befehl, den mobilen Tank anzuschließen. Hierzu ist das Bewegungssystem beispielsweise oben auf der Umschlagstelle festmontiert. Das Bewegungssystem ist mit speziellen entwickelten Kupplungen ausgestattet, die ein zuverlässiges und effizientes An- und Abschließen des mobilen Tanks erlauben. Eine andere Möglichkeit, die ebenfalls Teil dieser Patentanmeldung ist, ist das Bewegungssystem unten aufzubauen, jedoch ist die Montage des Bewegungsarms oberhalb sinnvoller.

Das Logistiksystem kann weiterhin mindestens ein Lager für mehrere mobile Tanks aufweisen. Dadurch kann ein Puffer für das Fluid oder verschiedene Fluide vorgesehen werden, was die Flexibilität und Kapazität des Logistiksystems vergrößert.

Der mobile Tank kann auf einem fahrerlosen Flurförderfahrzeug montiert sein. Dadurch kann auch der Transport bzw. die Bereitstellung des mobilen Tanks automatisiert erfolgen, was den Personaleinsatz und somit Ressourcen reduziert.

Der Begriff "Flurförderfahrzeug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Fördermittel beziehen, das zu ebener Erde zum horizontalen Transport von Gütern eingesetzt ist. Der Begriff wird synonym zu Transportfahrzeug verwendet. Gegenstücke sind flurfreie Fördermittel, die entweder an Hallendecken hängen oder Schienen nutzen. Flurförderfahrzeuge können eingeteilt werden in gleislose Flurförderfahrzeuge, wie beispielsweise Hubwagen, Schlepper, Stapler etc., gleisgebundene Flurförderfahrzeuge, wie beispielsweise Loren, Schienenfahrzeuge, und spurgeführte Flurförderfahrzeuge, wie beispielsweise fahrerlose Transportsysteme. Flurförderzeuge können insbesondere Fördermittel sein, die ihrer Bauart nach dadurch gekennzeichnet sind, dass sie mit Rädern auf Flur laufen und frei lenkbar, zum Befördern, Ziehen oder Schieben von Lasten eingerichtet und zur innerbetrieblichen Verwendung bestimmt sind. Ein fahrerloses Flurförderfahrzeug (englisch Automated Guided Vehicle, AGV) ist ein flurgebundenes Fördermittel mit eigenem Fahrantrieb, das automatisch gesteuert und berührungslos geführt wird. Fahrerlose Flurförderfahrzeuge dienen dem Materialtransport, und zwar zum Ziehen oder Tragen von Fördergut mit aktiven oder passiven Lastaufnahmemitteln. Fahrerlose Transportsysteme (FTS) sind innerbetriebliche, flurgebundene Fördersysteme mit automatisch gesteuerten Fahrzeugen, deren primäre Aufgabe der Materialtransport, nicht aber der Personentransport ist. Sie werden innerhalb und außerhalb von Gebäuden eingesetzt und bestehen im Wesentlichen aus folgenden Komponenten: einem oder mehreren fahrerlosen Transportfahrzeugen, einer Leitsteuerung, Einrichtungen zur Standortbestimmung und Lageerfassung, Einrichtungen zur Datenübertragung, Infrastruktur und peripheren Einrichtungen.

Der Rohranschluss kann mindestens einen Schlauch umfassen. Der Schlauch kann mit dem Kupplungssystem verbunden oder verbindbar sein. Der Bewegungsarm kann zum Greifen und zum Bewegen des Schlauches ausgebildet sein. Ein Schlauch weist im Gegensatz zu einem vergleichsweise starren Rohr den Vorteil auf, dass dieser flexibel ist und somit leichter zu einer Sollposition bewegt werden kann.

Der Begriff "Schlauch", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen flexiblen länglichen Hohlkörper mit zumeist rundem Querschnitt im Unterschied zum unflexiblen Rohr beziehen. Der Begriff Schlauchleitung bezeichnet einen Schlauch, der für einen dauerhaften Einsatz installiert wurde. Die innerste, abdichtende Schicht eines Schlauchs wird als Seele bezeichnet. Die äußerste Schicht heißt Decke. Dazwischen befindet sich häufig eine Einlage aus Gewebe oder gewickelten Fasern bzw. Draht, welche die Formstabilität und Druckfestigkeit des Schlauchs erhöht. Ähnlich wie Well- und Leerrohr werden Saugschläuche häufig mit einer Spirale aus Kunststoff oder Stahldraht ausgestattet, um die Querschnittsstabilität zu erhöhen. Schläuche dienen in vielen Fällen als Schlauchleitungen zum Transport von Stoffen. Etwa dann, wenn feste Rohrleitungen zu schwer oder zu aufwändig zu montieren und wenn Anschluss- oder Auslassstellen beweglich sind.

Der Bewegungsarm kann zum Entfernen eines Deckels von dem Tankstutzen des mobilen Tanks ausgebildet sein. Alternativ oder zusätzlich kann der Bewegungsarm zum Anbringen eines Deckels auf dem Tankstutzen des mobilen Tanks ausgebildet sein. Entsprechend kann der Deckel ohne Personalaufwand und somit ressourcensparend von dem Tankstutzen entfernt oder auf diesen angebracht werden.

Der Begriff "Deckel", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Abdeckung beziehen, die zum Schutz des Tankstutzens vor Verunreinigungen und/oder Beschädigungen eingesetzt wird.

Die Umschlagstelle kann weiterhin mindestens einen Tanksensor umfassen. Der Tanksensor kann eingerichtet sein eine Position und/oder Art des Tankstutzens des mobilen Tanks zu erfassen. Das Ergebnis der Erfassung durch einen solchen Tanksensor kann genutzt werden, den Bewegungsarm mit der richtigen Kupplung an die richtige Position zu führen, um das automatische Anschließen des Rohranschlusses zu erlauben.

Der Tanksensor kann mindestens einen optischen Sensor, eine Kamera, einen Lasersensor, einen Lidar Sensor, einen mechanischen Sensor, wie beispielsweise einen Messtaster, einen induktiven Sensor, einen Ultraschallsensor und/oder einen Infrarotsensor aufweisen.

Die Umschlagstelle kann weiterhin mindestens eine Reinigungsvorrichtung umfassen. Die Reinigungsvorrichtung kann eingerichtet sein zum zumindest äußerlichen Reinigen des Tankstutzens des mobilen Tanks. Damit wird sichergestellt, dass es zu keinen Verunreinigungen des Fluids beim Beladen oder Entladen kommt.

Der Begriff "Reinigungsvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, die zum zumindest teilweisen Entfernen von Schutz oder unerwünschten Teilchen, Partikeln, Ablagerungen und dergleichen eingerichtet ist. Die Reinigungswirkung kann dabei auf physikalische Weise, chemische Weise und/oder mechanische Weise erfolgen.

Die Umschlagstelle kann weiterhin eingerichtet sein, um den mobilen Tank zu temperieren. Dadurch kann das Fluid im Inneren des mobilen Tanks auf einer vorbestimmten Temperatur gebracht und gehalten werden.

Der Begriff "Temperieren" und seine grammatikalischen Äquivalente, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Tätigkeit beziehen, bei der das fluide Medium auf eine vorbestimmte Temperatur gebracht wird. Die Temperatureinstellung kann dabei mittels Steuerung und/oder Regelung erfolgen.

Insbesondere kann die Umschlagstelle eingerichtet sein, um den mobilen Tank zu heizen oder zu kühlen. Somit kann eine Temperatur des Fluids eingestellt werden.

Die Umschlagstelle kann zum lösbaren Anschließen eines Temperieranschlusses an den mobilen Tank ausgebildet sein. Dadurch kann das Temperieren nach Bedarf erfolgen. Außerdem ist eine lösbare Verbindung platzsparender und erlaubt mehr Flexibilität.

Der Begriff "Temperieranschluss", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Anschluss beziehen, der zum Zuführen und/oder Abführen von Wärme an den mobilen Tank anschließbar oder verbindbar ist. Das Zuführen und/oder Abführen der Wärme kann dabei elektrisch und/oder mittels eines Wärmeträgers, wie beispielsweise einer Flüssigkeit, erfolgen.

Das Bewegungssystem kann zum lösbaren Anschließen des Temperieranschlusses an den mobilen Tank ausgebildet sein. Somit kann das Bewegungssystem nicht nur das Kupplungssystem an seine Sollposition(en) bewegen, sondern auch den Temperieranschluss. Dadurch wird weiter der Personalbedarf reduziert und die Flexibilität erhöht.

Die Umschlagstelle kann weiterhin mindestens eine Überwachungsvorrichtung aufweisen. Die Überwachungsvorrichtung kann eingerichtet sein, um einen Beladungszustand des mobilen Tanks zu überwachen. Somit lassen sich zuverlässig Fehlbefüllungen, d.h. Abweichungen von einer Sollmenge an Fluid, des mobilen Tanks verhindern.

Das automatische Kupplungssystem kann mindestens ein Kupplungsstück aufweisen. Das automatische Kupplungsstück kann eingerichtet sein, den mindestens einen Tankstutzen des mobilen Tanks durch Aufsetzen des Kupplungsstücks automatisch zu öffnen. Somit lässt sich der Tankstutzen ohne weiteren Arbeitsschritt beim Aufsetzen des Kupplungsstücks öffnen, was die Anzahl an Arbeitsschritten reduziert.

Die Umschlagstelle kann weiterhin mindestens eine begehbare Plattform aufweisen. Dadurch kann ein Bediener oder Mitarbeiter die Funktionen des Logistiksystems überwachen.

Der Begriff "begehbare Plattform", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine begrenzte, ebene, erhöhte Fläche beziehen, die von mindestens einer Person betretbar ist.

Die begehbare Plattform kann einen Boden mit einer Öffnung und einer Tür aufweisen. Insbesondere kann die begehbare Plattform eine Klappe und/oder eine Schiebetür aufweisen. Die Tür kann zum wahlweisen Verschließen und Freigeben der Öffnung ausgebildet sein. Der Boden kann in einer Höhe angeordnet sein, die eine Höhe des mobilen Tanks überschreitet. Dadurch kann eine Oberseite des mobilen Tanks für einen Bediener oder Mitarbeiter freigegeben werden.

Der Boden der begehbaren Plattform kann bei einem Beladen und/oder Entladen des mobilen Tanks oberhalb des mobilen Tanks angeordnet sein. Dadurch kann eine Oberseite des mobilen Tanks nur für einen Bediener oder Mitarbeiter freigegeben werden, wenn sich ein mobiler Tank darunter befindet. Dies erhöht die Arbeitssicherheit und verhindert ein versehentliches Abstürzen des Mitarbeiters.

Die Steuerung kann eingerichtet sein, die Öffnung mittels Bewegens der Tür freizugeben, wenn sich der mobile Tank an einer vorbestimmten Position unterhalb des Bodens befindet. Dadurch kann eine Oberseite des mobilen Tanks nur für einen Bediener oder Mitarbeiter freigegeben werden, wenn sich ein mobiler Tank darunter befindet. Dies erhöht die Arbeitssicherheit und verhindert ein versehentliches Abstürzen des Mitarbeiters.

Das Logistiksystem kann weiterhin mindestens einen mobilen Tank umfassen.

Das Bewegungssystem kann ein Robotersystem sein. Der Bewegungsarm kann ein Roboterarm sein. Dadurch lassen sich Bewegungen mit einer Mehrzahl von Freiheitsgraden realisieren.

In einem weiteren Aspekt der vorliegenden Erfindung wird ein Verfahren zum automatischen Umschlag mindestens eines fluiden Mediums unter Verwendung mindestens eines Logistiksystems nach Anspruch 1 oder einem der abhängigen Ansprüche 2-14 vorgeschlagen. Das Verfahren umfasst die nachfolgend beschriebenen Verfahrensschritte, welche vorzugsweise, jedoch nicht notwendigerweise, in der dargestellten Reihenfolge durchgeführt werden können. Weiterhin können ein oder mehrere Verfahrensschritte auch gleichzeitig oder zeitlich überlappend durchgeführt werden. Weiterhin können auch ein oder mehrere Verfahrensschritte oder alle Verfahrensschritte wiederholt durchgeführt werden. Das Verfahren kann über die dargestellten Verfahrensschritte hinaus weitere Verfahrensschritte umfassen. Das Verfahren umfasst die folgenden Schritte:
i. Verbringung des mindestens einen mobilen Tanks an die Umschlagstelle;
ii. automatisches Öffnen des mindestens einen Rohranschlusses der Umschlagstelle mittels des automatischen Kupplungssystems;
iii. automatisches Öffnen des mindestens einen Tankstutzens des mobilen Tanks mittels des automatischen Kupplungssystems;
iv. Herstellen mindestens einer fluidischen Verbindung zwischen dem Tankstutzen und dem Rohranschluss mittels des automatischen Kupplungssystems; und
v. Durchführen mindestens eines Vorgangs ausgewählt aus der Gruppe bestehend aus: einem Beladen des mobilen Tanks mit dem fluiden Medium aus dem Rohrsystem der Umschlagstelle; Entladen des fluiden Mediums aus dem mobilen Tank in das Rohrsystem der Umschlagstelle.

Das erfindungsgemäße Verfahren erlaubt durch Automation das Be- und/oder Entladen komplett zu automatisieren und hierdurch die Umschlagsstellen flexibel einerseits mit hohen und andererseits mit einer niedrigeren Anzahl von zu beladenden und entladenden mobilen Tanks zu betreiben. Hierdurch werden auch Absicherungskonzepte erst möglich bei denen z.B. die Hälfte der Produkte mit einem Verkehrsträger, wie z.B. Binnenschiff, und die andere Hälfte mit einem anderen Verkehrsträger, wie z.B. Bahn, transportiert werden sollen. Kommt es bei einem Verkehrsträger zu Engpässen, wie z.B. Niedrigwasser bei der Binnenschifffahrt, kann so flexibel auf den anderen Verkehrsträger gewechselt werden. Dies ist möglich, da durch Automatisierung das Verladepersonal keinen Engpass bilden kann. Das erfindungsgemäße Logistiksystem umfasst dabei den gesamten Prozess von der Bestellung, über die Anlieferung, der Positionierung unter der Umschlagsstelle, dem Anschluss an die Umschlagsstelle, dem Entladevorgang bzw. Beladevorgang, der Festlegung des korrekten Be- oder Entladegewichts, der Überwachung während der Be- und Entladung, dem Abschließen des mobilen Tanks nach erfolgter Be-und Entladung, der Abmeldung des mobilen Tanks und dem Rücktransport des mobilen Tanks.

Der Begriff "Verbringung des mindestens einen mobilen Tanks an die Umschlagstelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Vorgang beziehen, bei dem der mobile Tank an der Umschlagstelle bereitgestellt wird. Zu diesem Zweck kann der Mobile Tank an die Umschlagstelle bewegt werden, insbesondere transportiert werden.

Das Verfahren kann durch die Steuerung computergesteuert sein. Dadurch wird der Automatisierungsgrad erhöht.

Der Begriff "computergesteuert", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Funktion oder einen Vorgang beziehen, die oder der zumindest teilweise unter Verwendung eines Computerprogramms realisiert wird.

Das Verfahren kann weiterhin Freischalten oder Blockieren der fluidischen Verbindung zwischen dem Tankstutzen und dem Rohranschluss mittels der Steuerung umfassen. Somit kann die Steuerung eine Durchströmung der Verbindung zwischen dem Tankstutzen und dem Rohranschluss erlauben oder verhindern.

Das Verfahren kann weiterhin Erfassen mindestens eines Parameters des fluiden Mediums umfassen.

Das Verfahren kann weiterhin Vergleichen des mindestens einen Parameter mit mindestens einer Vorgabe und entsprechend dem Ergebnis des Vergleichs Freischalten oder Blockieren der fluidischen Verbindung zwischen dem Tankstutzen und dem Rohranschluss umfassen. Mit anderen Worten kann die Steuerung überprüfen, ob das fluide Medium einer Spezifikation entspricht, und ein Beladen oder Entladen zu erlauben oder zu verhindern. Beispielsweise wird das Produkt auf Korrektheit und Reinheit geprüft. Nach erfolgter Qualitätsfreigabe wird die Leitung auf den angeschlossenen stationären Tank, anderen mobilen Tank oder Pipeline zum Verbraucher geschaltet und der Tank entleert.

Das Verfahren kann weiterhin Erfassen eines Bedarfs eines Umschlags des fluiden Mediums, und automatisches Anfordern und an der Umschlagstelle Bereitstellen mindestens eines mobilen Tanks für den Umschlag entsprechend des Bedarfs umfassen. Die Anforderung des mobilen Tanks kann dabei durch einen entsprechenden Auftrag erfolgen. Der Auftrag geht beispielsweise an ein vollautomatisches Lager für mobile Tanks oder an einem in Transport befindlichen Tank. Hierbei wird der Auftrag erteilt, einen entsprechenden mobilen Tank an die Umschlagsstelle zu bringen. Im vollautomatisierten Fall wird der entsprechende mobile Tank im Tankcontainerlager von einem automatischen Kran gepickt und auf einen bereitgestellten AGV-Rahmen verladen. Dieser wird über einen von der Steuerung zu setzenden Auftrag mit einem AGV (automatisches Transportsystem für mobile Tanks) zur Ladestelle gefahren. Das AGV positioniert dabei den Tank exakt unter der Umschlagsstelle, so dass der mobile Tank automatisch angeschlossen werden kann. In nicht vollständig automatisierten Systemen erfolgt die Positionierung an der Ladestelle per Orientierungsmarke durch einen Fahrer, wie beispielsweise an einem Tankzug, TC oder BTC auf LKW-Chassis, durch einen Lokführer, wie beispielsweise an einem Kesselwagen, Tankcontainer oder BTC auf Tragwagen, oder durch den Kapitän, wie beispielsweise eines Binnentankschiffs. Nach der Positionierung und Erkennung des mobilen Tanks durch die Steuerung, gibt die Steuerung dem Bewegungssystem den Befehl, den mobilen Tank anzuschließen. Hierzu ist das Bewegungssystem beispielsweise oben auf der Umschlagstelle festmontiert. Das Bewegungssystem ist mit speziellen entwickelten Kupplungen ausgestattet, die ein zuverlässiges und effizientes An- und Abschließen des mobilen Tanks erlauben. Eine andere Möglichkeit, die ebenfalls Teil dieser Patentanmeldung ist, ist das Bewegungssystem unten aufzubauen, jedoch ist die Montage des Bewegungsarms oberhalb sinnvoller.

Der mobile Tank kann auf einem fahrerlosen Flurförderfahrzeug verbracht werden. Dadurch kann auch der Transport bzw. die Bereitstellung des mobilen Tanks automatisiert erfolgen, was den Personaleinsatz und somit Ressourcen reduziert.

Der Rohranschluss kann mindestens einen Schlauch umfassen. Das Verfahren kann weiterhin Greifen und Bewegen des Schlauches mittels des Bewegungsarms umfassen. Der Schlauch kann mit dem Kupplungssystem verbunden oder verbindbar sein. Der Bewegungsarm kann zum Greifen und zum Bewegen des Schlauches ausgebildet sein. Ein Schlauch weist im Gegensatz zu einem vergleichsweise starren Rohr den Vorteil auf, dass dieser flexibel ist und somit leichter zu einer Sollposition bewegt werden kann.

Dass Verfahren kann weiterhin Entfernen und/oder Anbringen eines Deckels von und/oder auf dem Tankstutzen des mobilen Tanks mittels des Bewegungsarms umfassen. Entsprechend kann der Deckel ohne Personalaufwand und somit ressourcensparend von dem Tankstutzen entfernt oder auf diesen angebracht werden.

Das Verfahren kann weiterhin Erfassen einer Position und/oder Art des Tankstutzens des mobilen Tanks umfassen. Das Ergebnis der Erfassung durch einen solchen Tanksensor kann genutzt werden, den Bewegungsarm mit der richtigen Kupplung an die richtige Position zu führen, um das automatische Anschließen des Rohranschlusses zu erlauben.

Das Verfahren kann weiterhin zumindest äußerliches Reinigen des Tankstutzens des mobilen Tanks umfassen. Damit wird sichergestellt, dass es zu keinen Verunreinigungen des Fluids beim Be- oder Entladen kommt.

Das Verfahren kann weiterhin Temperieren, insbesondere Heizen oder Kühlen, des mobilen Tanks umfassen. Dadurch kann das Fluid im Inneren des mobilen Tanks auf einer vorbestimmten Temperatur gebracht und gehalten werden.

Das Verfahren kann weiterhin lösbares Anschließen eines Temperieranschlusses an den mobilen Tank umfassen. Dadurch kann das Temperieren nach Bedarf erfolgen. Außerdem ist eine lösbare Verbindung platzsparender und erlaubt mehr Flexibilität.

Das lösbare Anschließen des Temperieranschlusses an den mobilen Tank kann mittels eines Bewegungsarms erfolgen. Somit kann das Bewegungssystem nicht nur das Kupplungssystem an seine Sollposition(en) bewegen, sondern auch den Temperieranschluss. Dadurch wird weiter der Personalbedarf reduziert und die Flexibilität erhöht.

Das Verfahren kann weiterhin Überwachen eines Beladungszustands des mobilen Tanks umfassen. Somit lassen sich zuverlässig Fehlbefüllungen, d.h. Abweichungen von einer Sollmenge an Fluid, des mobilen Tanks verhindern.

Die Umschlagstelle kann weiterhin mindestens eine begehbare Plattform aufweisen. Die begehbare Plattform kann einen Boden mit einer Öffnung und einer Tür, insbesondere einer Klappe und/oder einer Schiebetür, aufweisen. Der Boden kann in einer Höhe angeordnet sein, die eine Höhe des mobilen Tanks überschreitet. Das Verfahren kann weiterhin wahlweises Verschließen und Freigeben der Öffnung mittels der Tür umfassen. Dadurch kann ein Bediener oder Mitarbeiter die Funktionen des Logistiksystems überwachen. Dadurch kann eine Oberseite des mobilen Tanks für einen Bediener oder Mitarbeiter freigegeben werden.

Das Verfahren kann weiterhin Freigeben der Öffnung mittels Bewegens der Tür, wenn sich der mobile Tank an einer vorbestimmten Position unterhalb des Bodens befindet, umfassen. Dadurch kann eine Oberseite des mobilen Tanks nur für einen Bediener oder Mitarbeiter freigegeben werden, wenn sich ein mobiler Tank darunter befindet. Dies erhöht die Arbeitssicherheit und verhindert ein versehentliches Abstürzen des Mitarbeiters.

Der mobile Tank kann eine Tanknummer aufweisen. Das Verfahren kann weiterhin Erfassen der Tanknummer des mobilen Tanks mittels eines Sensors oder eines OCR-Systems, Vergleichen der erfassten Tanknummer mit einer in einer Datenbank hinterlegten Tanknummer, Verifizieren der erfassten Tanknummer auf Korrektheit und Freigeben des mobilen Tanks zur Be-und/oder Entladung, wenn die Verifizierung der Tanknummer des mobilen Tanks korrekt ist, umfassen. Dies erhöht die Sicherheit beim Umgang mit dem Inhalt des mobilen Tanks

Beispielsweise kann die erfasste Tanknummer mit einer in einem Auftrag hinterlegten Tanknummer verglichen werden.

Die Tanknummer kann mittels einer Prüfziffer auf Korrektheit verifiziert werden.

Das Verfahren kann weiterhin über einen Sensor oder ein OCR-System eine Kennzeichnung des mobilen Tanks erkennen und entsprechend den Vorgaben in einem Computerprogramm mittels einer Maschine zur Kennzeichnung von mobilen Tanks Labels oder Warntafeln anbringen oder alte Labels oder Warntafeln entfernen bzw. verdecken. Hierdurch ist das System auch in der Lage die richtige und korrekte Gefahrgutkennzeichnung nach der Be- und/oder Entladung am mobilen Tank anzubringen.

Die Kennzeichnung kann insbesondere eine Gefahrgutkennzeichnung sein.

In einem weiteren Aspekt der vorliegenden Erfindung wird weiterhin ein Computerprogramm-produkt vorgeschlagen, das Befehle umfasst, die bewirken, dass das Logistiksystem gemäß einer der vorstehend oder nachstehend beschriebenen, ein Logistiksystem betreffenden Ausführungsformen die Verfahrensschritte nach einer der vorstehend oder nachstehend beschriebenen, ein Verfahren betreffenden Ausführungsformen ausführt.

Nicht wie in der beanspruchten Erfindung wird computerlesbares Medium, insbesondere nicht-flüchtiges computerlesbares Medium, vorgeschlagen, auf dem das Computerprogramm nach der vorstehend beschriebenen Ausführungsform gespeichert ist.

Nicht wie in der beanspruchten Erfindung wird ein Computerprogramm vorgeschlagen, das bei Ablauf auf einem Computer oder Computer-Netzwerk das erfindungsgemäße Verfahren in einer seiner Ausgestaltungen ausführt.

Nicht wie in der beanspruchten Erfindung wird ein Computerprogramm mit Pro-gramm code-Mitteln vorgeschlagen, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Nicht wie in der beanspruchten Erfindung wird ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Nicht wie in der beanspruchten Erfindung wird ein nicht-transientes computerlesbares Medium vorgeschlagen, umfassend Instruktionen, die, wenn sie von einem oder mehreren Prozessoren ausgeführt werden, den einen oder die mehreren Prozessoren dazu veranlassen, ...

Nicht wie in der beanspruchten Erfindung wird ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Nicht wie in der beanspruchten Erfindung wird ein moduliertes Datensignal vorgeschlagen, welches von einem Computersystem oder Computernetzwerk ausführbare Instruktionen zum Ausführen eines Verfahrens nach einer der beschriebenen Ausführungs-formen enthält.

Nicht wie in der beanspruchten Erfindung können computer-implementierte Aspekte einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Proben und/oder bestimmte Aspekte der Durchführung tatsächlicher Messungen.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine perspektivische Ansicht eines erfindungsgemäßen Logistiksystems;
- Figur 2: eine weitere perspektivische Ansicht des erfindungsgemäßen Logistiksystems;
- Figur 3: eine weitere perspektivische Ansicht des erfindungsgemäßen Logistiksystems;
- Figur 4: eine weitere perspektivische Ansicht des erfindungsgemäßen Logistiksystems;
- Figur 5: eine weitere perspektivische Ansicht des erfindungsgemäßen Logistiksystems;
- Figur 6: eine weitere perspektivische Ansicht des erfindungsgemäßen Logistiksystems;
- Figur 7: eine weitere perspektivische Ansicht des erfindungsgemäßen Logistiksystems;
- Figur 8: eine weitere perspektivische Ansicht des erfindungsgemäßen Logistiksystems;
- Figur 9: eine weitere perspektivische Ansicht des erfindungsgemäßen Logistiksystems;
- Figur 10: eine weitere perspektivische Ansicht des erfindungsgemäßen Logistiksystems;
- Figur 11: eine weitere perspektivische Ansicht des erfindungsgemäßen Logistiksystems;
- Figur 12: eine weitere perspektivische Ansicht des erfindungsgemäßen Logistiksystems;
- Figur 13: eine weitere perspektivische Ansicht des erfindungsgemäßen Logistiksystems;
- Figur 14: eine weitere perspektivische Ansicht des erfindungsgemäßen Logistiksystems;
- Figur 15: eine weitere perspektivische Ansicht des erfindungsgemäßen Logistiksystems; und
- Figur 16: eine weitere perspektivische Ansicht des erfindungsgemäßen Logistiksystems.

### Beschreibung der Ausführungsbeispiele

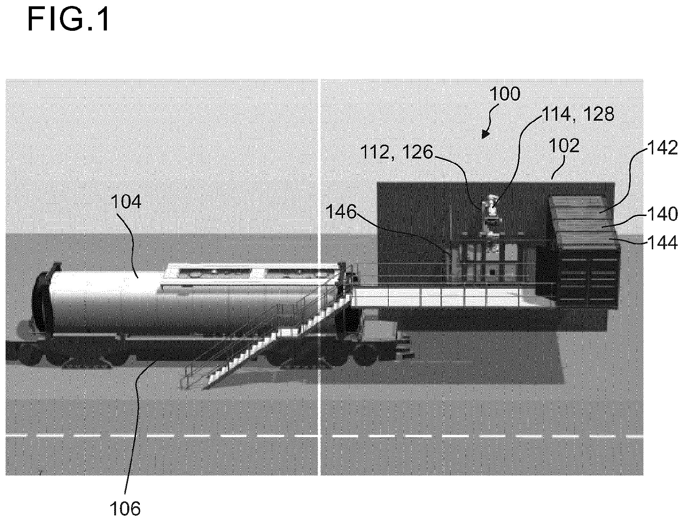

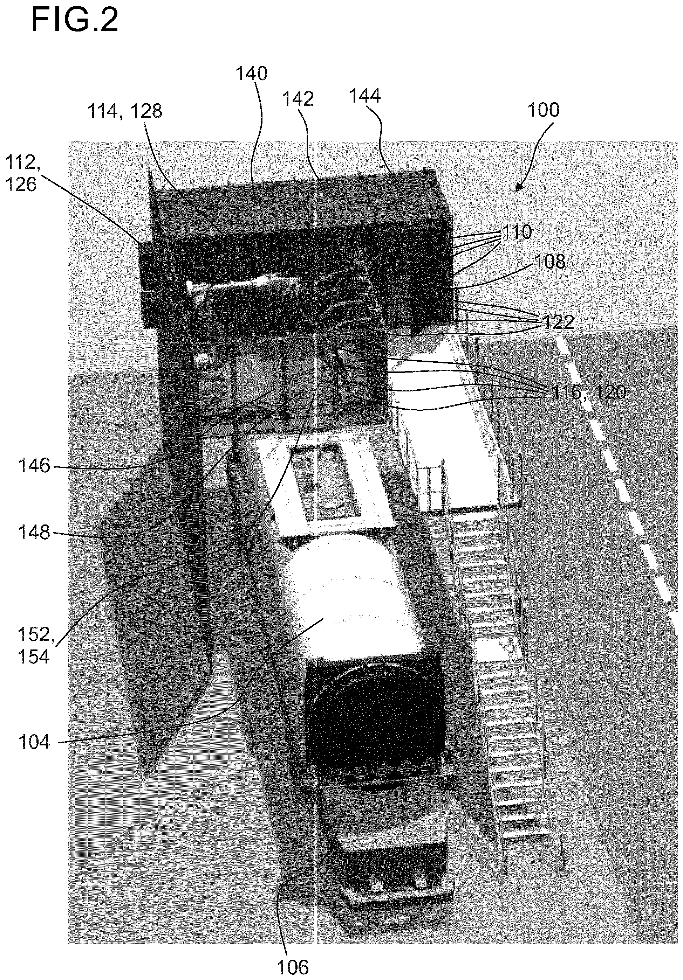

Figur 1 zeigt eine perspektivische Ansicht eines erfindungsgemäßen Logistiksystems 100. Das Logistiksystem 100 ist eingerichtet zum automatischen Umschlag mindestens eines fluiden Mediums. Die Figuren 2 bis 15 zeigen weitere perspektivische Ansichten des Logistiksystems 100, die verschiedene Details und verschiedene Stadien eines nachstehend näher beschriebenen erfindungsgemäßen Verfahrens darstellen. Bei dem fluiden Medium kann es sich grundsätzlich um eine Flüssigkeit und/oder ein Gas handeln. Das Logistiksystem 100 umfasst mindestens eine Umschlagstelle 102. Die Umschlagstelle 102 ist eingerichtet, um mindestens einen Vorgang durchzuführen ausgewählt aus der Gruppe bestehend aus einem Beladen eines mobilen Tanks 104 mit dem fluiden Medium und einem Entladen des fluiden Mediums aus dem mobilen Tank 104. Die Umschlagstelle 102 ist stationär. Alternativ kann die Umschlagstelle 102 mobil sein. Der mobile Tank 104 ist auf einem fahrerlosen Flurförderfahrzeug 106 montiert, beispielsweise lösbar montiert. Der mobile Tank 104 kann dabei Teil des Logistiksystems 100 sein, kann jedoch alternativ Teil eines separaten Systems bzw. ein unabhängig sein. Die Umschlagstelle 102 weist mindestens ein Rohrsystem 108 auf. Das Rohrsystem 108 weist mindestens einen Rohranschluss 110 auf. Beispielsweise weist das Rohrsystem 108 der Umschlagstelle 102 mehrere Rohranschlüsse 110 auf.

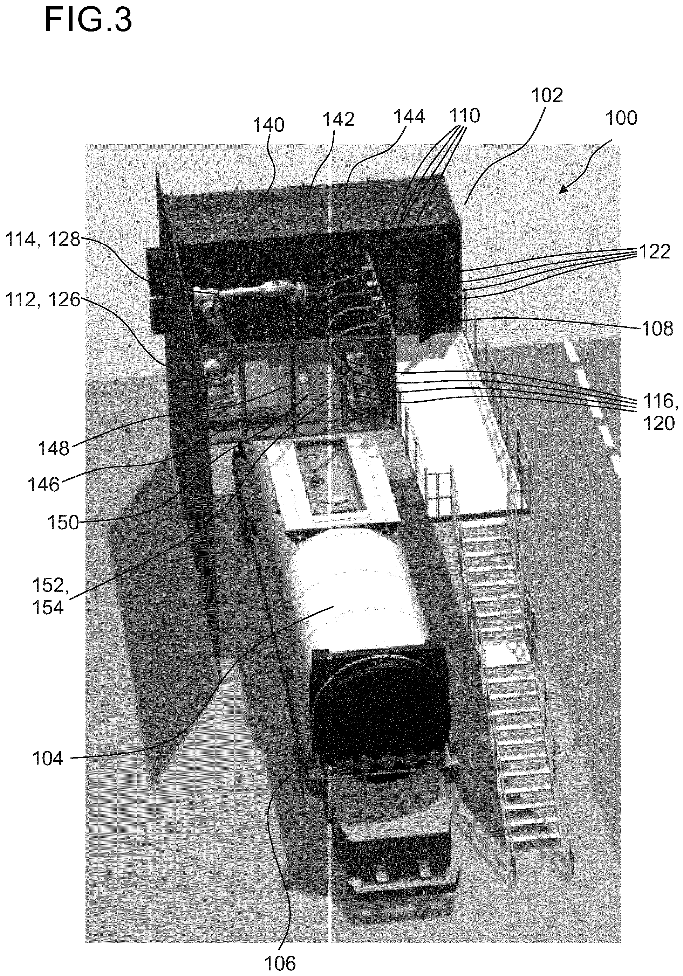

Wie unter anderem in den Figuren 2 und 3 zu erkennen ist, umfasst das Logistiksystem 100 weiterhin mindestens ein Bewegungssystem 112 auf. Das Bewegungssystem 112 weist mindestens eine Bewegungsarm 114 und ein automatisches Kupplungssystem 116 auf. Der Bewegungsarm 114 ist zum Bewegen des Kupplungssystems 116 eingerichtet. Das automatische Kupplungssystem 116 ist eingerichtet, um mindestens einen Tankstutzen 118 des mobilen Tanks 104 automatisch zu öffnen. Das automatische Kupplungssystem 116 ist weiterhin eingerichtet, um den Rohranschluss 110 der Umschlagstelle 102 automatisch zu öffnen. Das automatische Kupplungssystem 116 ist weiterhin eingerichtet, um den Tankstutzen 118 und den Rohranschluss 110 fluidisch zu verbinden. Zu diesem Zweck weist das automatische Kupplungssystem 116 mindestens ein Kupplungsstück 120 auf. Das automatische Kupplungsstück 120 ist eingerichtet, den mindestens einen Tankstutzen 118 des mobilen Tanks 104 durch Aufsetzen des Kupplungsstücks 120 automatisch zu öffnen. So ist das automatische Kupplungsstück 120 insbesondere ausgebildet, ein im oder am Tankstutzen 118 angeordnetes Ventil zu öffnen, sobald das Kupplungsstück 120 auf den Tankstutzen 118 aufgesetzt wird bzw. auf diesem angeordnet wird. Das Kupplungssystem 116 kann prinzipiell jedes Kupplungssystem sein, das nach der Art einer Schnellkupplung wie bei einer Schlauchkupplung funktioniert. Beispielsweise kann das Kupplungssystem 116 eine Durchgangskupplung, Verschlusskupplung oder eine sogenannte Clean-Break-Kupplung umfassen.

Der Rohranschluss 110 umfasst mindestens einen Schlauch 122. Der Schlauch 122 ist mit dem Kupplungssystem 116 verbunden oder verbindbar. Der Bewegungsarm 114 ist zum Greifen und zum Bewegen des Schlauchs 122 ausgebildet ist. Der Bewegungsarm 114 ist weiterhin zum Entfernen eines Deckels 124 von dem Tankstutzen 118 des mobilen Tanks 104 ausgebildet. Alternativ oder zusätzlich ist der Bewegungsarm 114 zum Anbringen eines Deckels 124 auf dem Tankstutzen 118 des mobilen Tanks 104 ausgebildet. Das Bewegungssystem 112 ist bei der gezeigten Ausführungsform ein Robotersystem 126. Der Bewegungsarm 114 ist dabei ein Roboterarm 128. Alternativ oder zusätzlich kann es sich bei dem Bewegungssystem 114 um ein Portalsystem oder eine Werkzeugmaschine mit einem Gantry-Antrieb handeln.

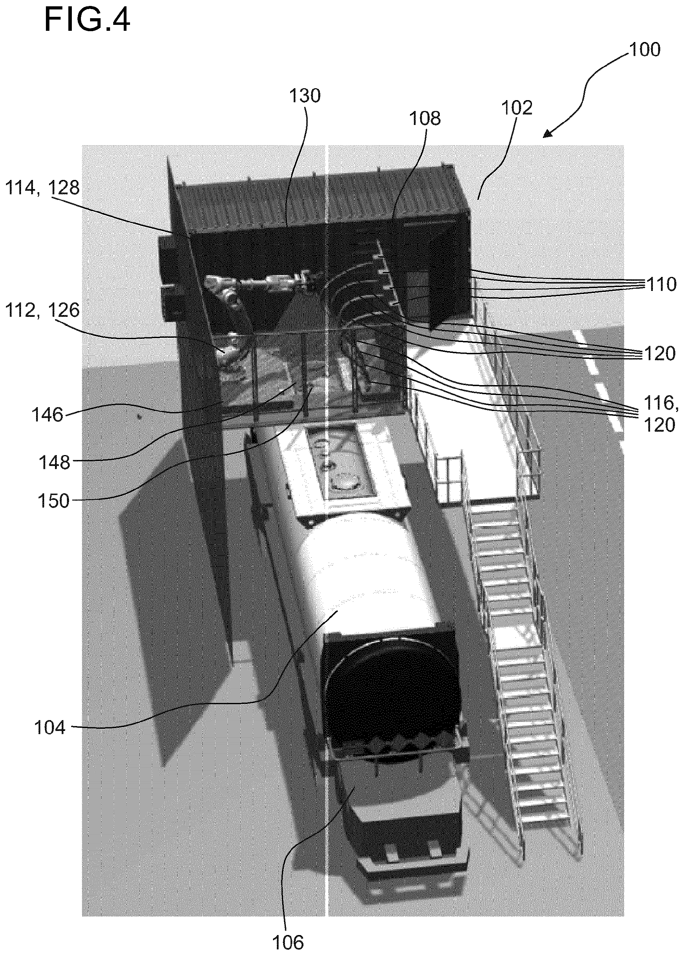

Wie in Figur 4 zu erkennen ist, umfasst die Umschlagstelle 102 weiterhin mindestens einen Tanksensor 130. Der Tanksensor 130 ist eingerichtet eine Position und/oder Art des Tankstutzens 118 des mobilen Tanks 104 zu erfassen. Der Tanksensor 130 weist zu diesem Zweck mindestens einen optischen Sensor, einen Lasersensor, einen Messtaster, einen induktiven Sensor und/oder einen Infrarotsensor auf. Der Tanksensor 130 ist insbesondere fest mit dem Bewegungsarm 114 verbunden. Alternativ kann der Tanksensor 130 lösbar mit dem Bewegungsarm 114 verbunden sein. Beispielsweise kann der Bewegungsarm 114 zum Greifen und Bewegen des Tanksensors 130 ausgebildet sein.

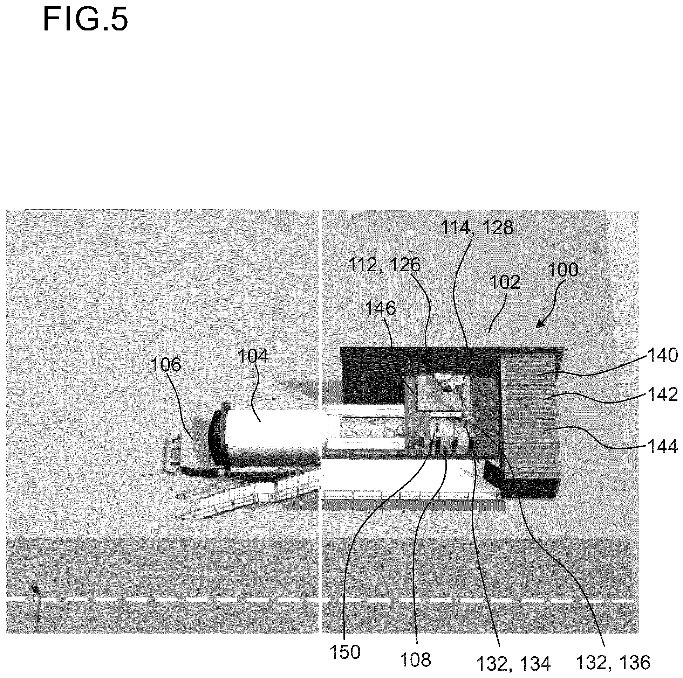

Wie in Figur 5 zu erkennen ist, umfasst die Umschlagstelle 102 weiterhin mindestens eine Reinigungsvorrichtung 132. Die Reinigungsvorrichtung 132 ist eingerichtet zum zumindest äußerlichen Reinigen des Tankstutzens 118 des mobilen Tanks 104. Beispielsweise umfasst die Reinigungsvorrichtung 132 einen Sprühkopf 134 zum Versprühen oder Aufbringen eines Reinigungsmittels und einen damit verbundenen Reinigungsschlauch 136. Der Reinigungsschlauch 136 kann wiederum mit dem Rohrsystem 108 fluidisch verbunden sein. Alternativ kann der Reinigungsschlauch 136 mit einem separaten Reinigungsrohrsystem verbunden sein. Die Umschlagstelle 102 ist weiterhin eingerichtet, um den mobilen Tank 104 zu temperieren. Insbesondere kann der mobile Tank 104 beheizt oder gekühlt werden. Zu diesem Zweck ist die Umschlagstelle 102 zum lösbaren Anschließen eines Temperieranschlusses 138 an den mobilen Tank 104 ausgebildet. Genauer ist das Bewegungssystem 112 zum lösbaren Anschließen des Temperieranschlusses 138 an den mobilen Tank 104 ausgebildet. Beispielsweise weist das Bewegungssystem 112 optional einen weiteren Bewegungsarm 114' auf, der zum Bewegen des Temperieranschlusses 138 ausgebildet ist. Alternativ kann je nach Anwendung der bewegungsarm 114 zum Bewegen des Temperieranschlusses 138 ausgebildet sein. Die Umschlagstelle 102 weist weiterhin mindestens eine Überwachungsvorrichtung 140 auf. Die Überwachungsvorrichtung 140 ist eingerichtet, um einen Beladungszustand des mobilen Tanks 104 zu überwachen. Beispielsweise umfasst die Überwachungsvorrichtung einen Füllstandsensor, Drucksensor und/oder einen Gewichtsensor oder dergleichen.

Das Logistiksystem 100 umfasst weiterhin mindestens eine Steuerung 142. Die Steuerung 142 ist programmtechnisch eingerichtet, um mindestens eine Funktion des Logistiksystems 100 zu steuern. Insbesondere ist die Steuerung 142 eingerichtet, um die fluidische Verbindung zwischen dem Tankstutzen 118 und dem Rohranschluss 110 freizuschalten oder zu blockieren. Die Steuerung 142 ist weiterhin eingerichtet, um einen Bedarf eines Umschlags des fluiden Mediums zu erfassen. Die Steuerung 142 ist weiterhin eingerichtet, um entsprechend des Bedarfs automatisch mindestens einen mobilen Tank 104 für den Umschlag anzufordern und an der Umschlagstelle 102 bereitzustellen.

Das Logistiksystem 100 umfasst weiterhin mindestens eine Analysevorrichtung 144 zur Erfassung mindestens eines Parameters des fluiden Mediums. Der Parameter ist ausgewählt aus der Gruppe bestehend aus: einer chemischen Eigenschaft des fluiden Mediums; einer Reinheit des fluiden Mediums; einer physikalischen Eigenschaft des fluiden Mediums, einer Art des fluiden Mediums, einer Füllmenge des fluiden Mediums innerhalb des mobilen Tanks 104. Die Steuerung 142 ist eingerichtet, um den mindestens einen Parameter mit mindestens einer Vorgabe zu vergleichen und entsprechend dem Ergebnis des Vergleichs die fluidische Verbindung zwischen dem Tankstutzen 118 und dem Rohranschluss 110 freizuschalten oder zu blockieren.

Bei der gezeigten Ausführungsform weist die Umschlagstelle 102 weiterhin optional mindestens eine begehbare Plattform 146 auf. Die begehbare Plattform 146 weist einen Boden 148 mit einer Öffnung 150 und einer Tür 152 auf. Der Boden 148 ist in einer Höhe angeordnet, die eine Höhe des mobilen Tanks 104 überschreitet. Dadurch ist der Boden 148 der begehbaren Plattform 146 bei einem Beladen und/oder Entladen des mobilen Tanks 104 oberhalb des mobilen Tanks 104 angeordnet. Die Tür 152 kann insbesondere eine Klappe und/oder eine Schiebetür 154 sein. Bei der gezeigten Ausführungsform ist die Tür 152 eine Schiebetür 154. Die Tür 152 ist zum wahlweisen Verschließen und Freigeben der Öffnung 150 ausgebildet. Die Steuerung 142 ist eingerichtet, die Öffnung 150 mittels Bewegens der Tür 152 freizugeben, wenn sich der mobile Tank 104 an einer vorbestimmten Position unterhalb des Bodens 148 befindet. Optional kann das Logistiksystem 100 weiterhin mindestens ein nicht näher gezeigtes Lager für mehrere mobile Tanks 104 aufweisen.

Nachstehend wird ein erfindungsgemäßes Verfahren zum Umschlag mindestens eines fluiden Mediums beschrieben. Bei dem Verfahren wird das erfindungsgemäße Logistiksystem 100 verwendet. Insbesondere ist das Verfahren durch die Steuerung 142 computergesteuert.

Zunächst wird mindestens ein mobiler Tank 104 an die Umschlagstelle 102 verbracht, wie in Figur 1 dargestellt ist. Die Öffnung 150 der begehbaren Plattform 146 ist mittels der Tür 152 blockiert. Der mobile Tank 104 wird auf einem fahrerlosen Flurförderfahrzeug 106 an die Umschlagstelle 102 verbracht bzw. dieser an dieser bereitgestellt. Insbesondere wird ein Bedarf eines Umschlags des fluiden Mediums erfasst. Ergibt beispielsweise eine Überwachung einer Produktion, dass Bedarf an einem vorbestimmten fluiden Medium besteht, triggert dies eine Bedarfsmeldung in der Steuerung 142. Daraufhin wird entsprechend des Bedarfs automatisch ein mobiler Tank 104 angefordert und an der Umschlagstelle 102 für den Umschlag bereitgestellt. Optional kann die Anforderung auch manuell ausgelöst werden. Auch kann der Bedarf ergeben, dass eine Produktion eine vorbestimmte Menge des fluiden Mediums erreicht hat und dieses somit zum Ausliefern bereit ist. Zu diesem Zweck muss dieses in einen mobilen Tank 104 gefördert werden.

Ist der mobile Tank 104 an der Umschlagstelle 102 bereitgestellt, wie in Figur 2 dargestellt ist, wird die Öffnung 150 der begehbaren Plattform 146 mittels Bewegens der Tür 152 freigegeben, wie in Figur 3 dargestellt ist, wenn sich der mobile Tank 104 an einer vorbestimmten Position unterhalb des Bodens 148 befindet. Andernfalls bleibt die Öffnung 150 durch die Tür 152 verschlossen. Dies dient der Absturzsicherung.

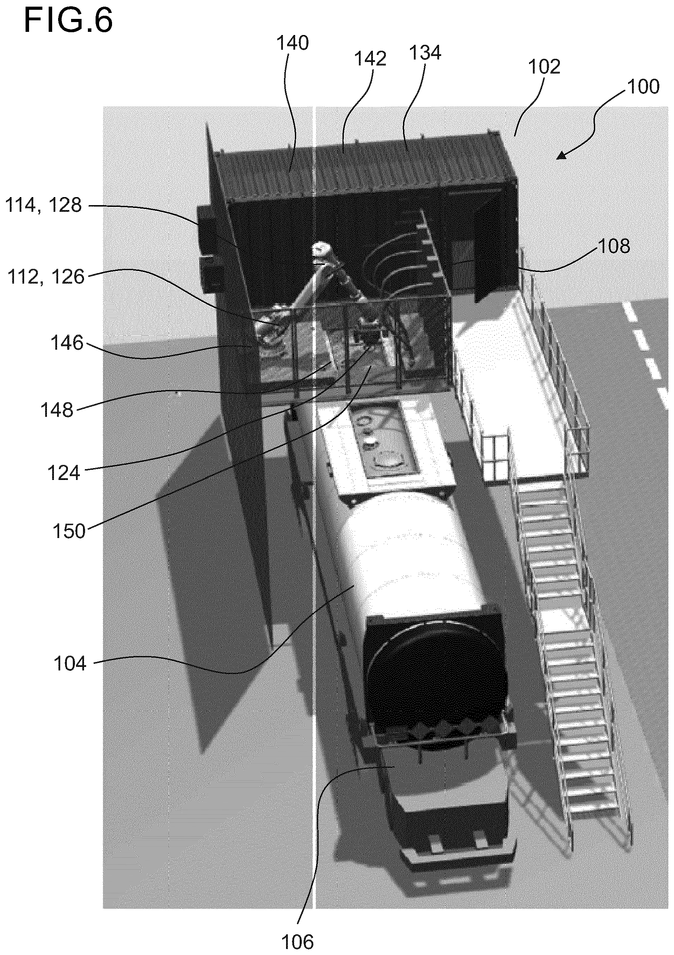

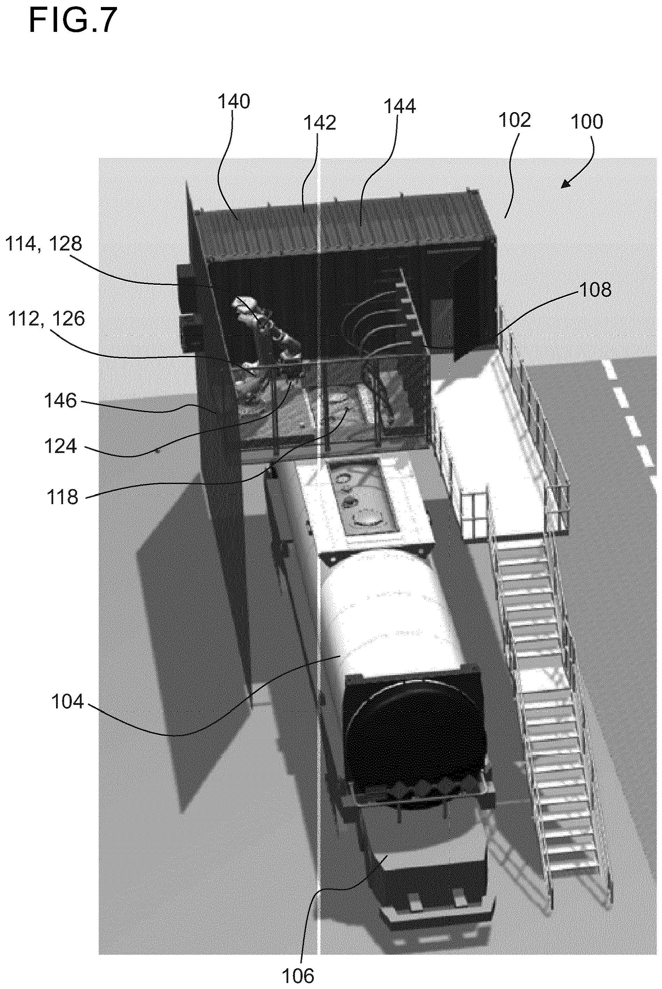

Dann erfasst der Tanksensor 130 eine Position und/oder Art des Tankstutzens 118 des mobilen Tanks 104, wie in Figur 4 dargestellt ist. Der Tanksensor 130 wird dazu von dem Bewegungsarm 114 gegriffen oder genommen und entlang eines Bereichs des mobilen Tanks 104 bewegt, in dem sich der Tankstutzen 118 befindet, wie beispielsweise entlang eines Bereichs einer Oberseite des mobilen Tanks 104. Die Reinigungsvorrichtung 132 reinigt den Tankstutzen 118 des mobilen Tanks 104 zumindest äußerlich, wie in Figur 5 dargestellt ist. Anschließend entfernt der Bewegungsarm 114 einen Deckel 124 von dem Tankstutzen 118 des mobilen Tanks 104, wie in Figur 6 dargestellt ist. Alternativ oder zusätzlich kann das Reinigen des Tankstutzens 118 nach dem Entfernen des Deckels 124 erfolgen. Wie in Figur 7 dargestellt ist, kann der Bewegungsarm 114 den Deckel 124 beispielswiese im Bereich der Plattform 146 ablegen.

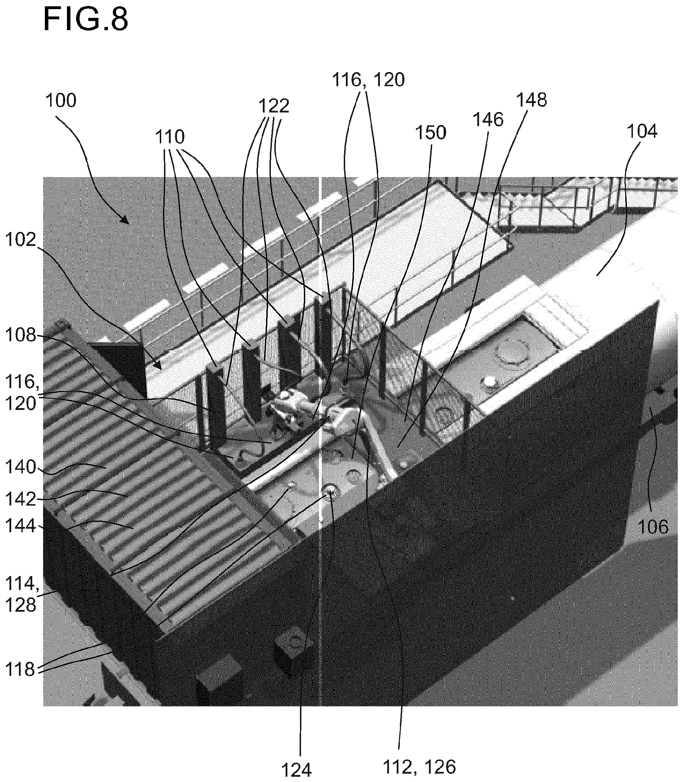

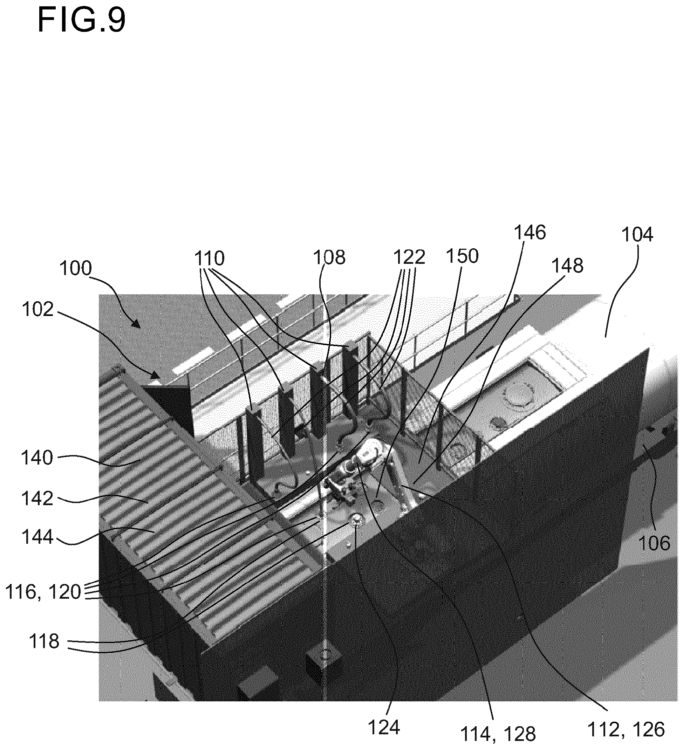

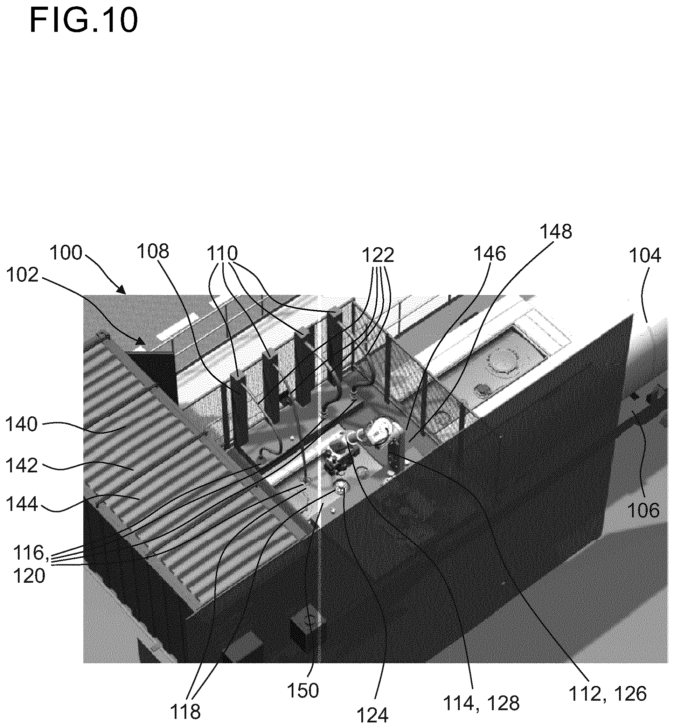

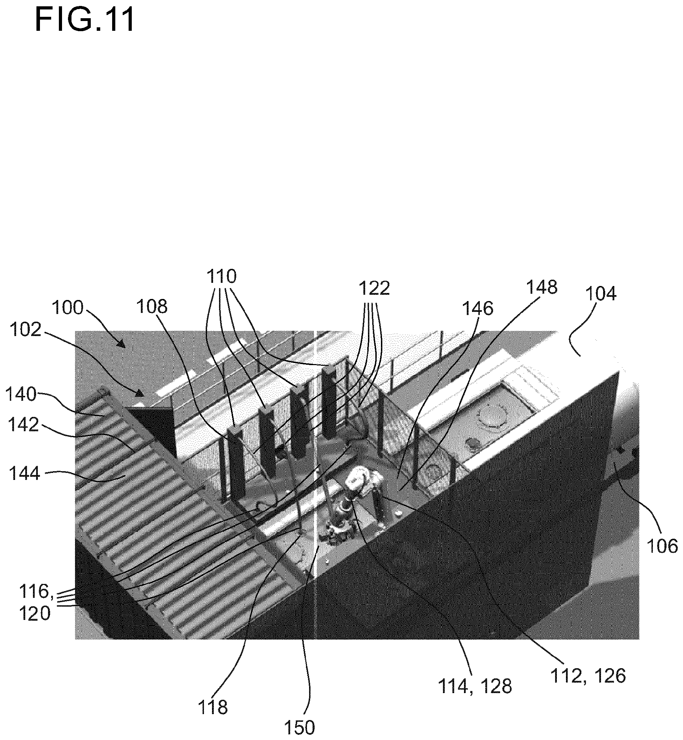

Anschließend greift der Bewegungsarm 114 den Schlauch 122 des Rohranschlusses 110, wie in Figur 8 dargestellt ist, und bewegt diesen zu dem Tankstutzen 118 des mobilen Tanks 104, wie in Figur 9 dargestellt ist. Wie in den Figuren 10 und 11 dargestellt ist, kann der Bewegungsarm 114 mehr als einen Schlauch 122 an mehr als einen Tankstutzen 118 des mobilen Tanks 104 anschließen. Der Schlauch 122 ist mit dem Kupplungssystem 116 verbunden oder wird zuvor mit diesem verbunden. Durch Aufsetzen des Kupplungsstücks 120 des Kupplungssystems 116 wird der Tankstutzen 118 des mobilen Tanks 104 automatisch geöffnet. Außerdem wird der Rohranschluss 110 mittels des Kupplungssystems 116 automatisch geöffnet. Auf diese Weise wird mittels des automatischen Kupplungssystems 116 mindestens eine fluidische Verbindung zwischen dem Tankstutzen 118 und dem Rohranschluss 110 hergestellt. Die Steuerung 142 kann die fluidische Verbindung zwischen dem Tankstutzen 118 und dem Rohranschluss 110 freischalten oder blockieren. So wird mittels der Analysevorrichtung 144 mindestens eines Parameters des fluiden Mediums erfasst. Der mindestens eine Parameter wird mit mindestens einer Vorgabe verglichen. Entsprechend dem Ergebnis des Vergleichs erfolgt dann das Freischalten oder Blockieren der fluidischen Verbindung zwischen dem Tankstutzen 118 und dem Rohranschluss 110. So öffnet die Steuerung 142 ein Ventil des Rohranschlusses 110, sofern der Parameter einer Vorgabe entspricht und schließt dieses, sofern der Parameter von der Vorgabe abweicht. Entspricht beispielsweise das fluide Medium und seine Eigenschaften einem angeforderten fluiden Medium und seinen Eigenschaften, wird die fluidische Verbindung freigegeben, andernfalls wird diese blockiert.

Im Fall einer Freigabe der fluidischen Verbindung wird der mobile Tank 104 beladen oder entladen. Auch ein Zirkulieren des fluiden Mediums im Kreislauf ist optional möglich. Dabei wird der Beladungszustand des mobilen Tanks 104 überwacht.

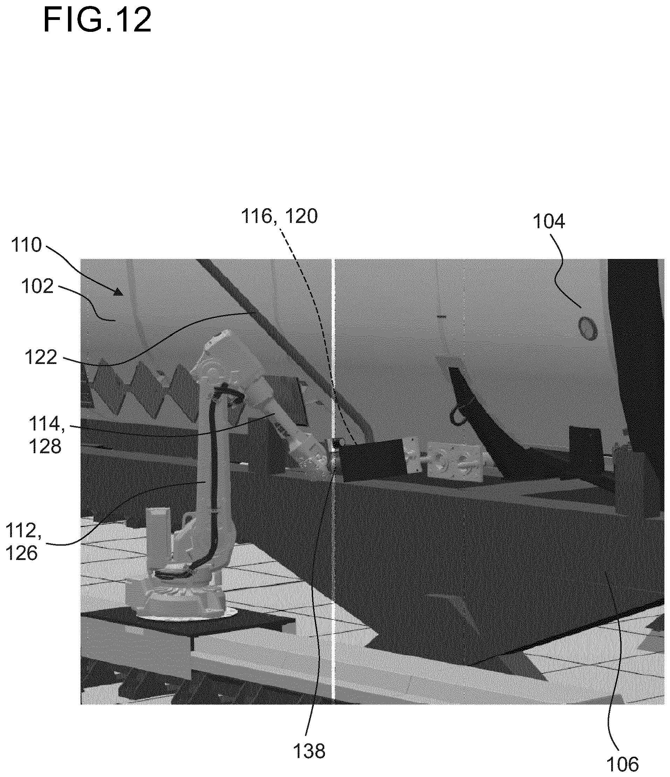

Optional wird der mobile Tank 104 bzw. das fluide Medium darin temperiert, beispielsweise beheizt oder gekühlt. Zu diesem Zweck kann der Temperieranschluss 138 lösbar an den mobilen Tank 104 angeschlossen werden, wie in Figur 12 dargestellt ist. Das lösbare Anschließen des Temperieranschlusses 138 an den mobilen Tank 104 erfolgt mittels des weiteren Bewegungsarms 114'. Das Temperieren erfolgt dabei insbesondere während des Be- und/oder Entladens des fluiden Mediums. Anschließend wird der Temperieranschluss 138 wieder von dem mobilen Tank 104 mittels des Roboterarms 128 entfernt.

Optional kann eine Tanknummer des mobilen Tanks104 mittels eines Sensors oder eines OCR-Systems erfasst werden. Die erfasste Tanknummer mit einer in einer Datenbank, wie beispielsweise einem Auftrag zum Bereitstellen des mobilen Tanks 104, hinterlegten Tanknummer vergleichen. Die so erfasste Tanknummer wird auf Korrektheit verifiziert. Die Tanknummer kann mittels einer Prüfziffer auf Korrektheit verifiziert werden. Eine Freigabe des mobilen Tanks zur Be- und/oder Entladung erfolgt nur, wenn die Verifizierung der Tanknummer des mobilen Tanks korrekt ist. Andernfalls erfolgt keine Freigabe.

Optional kann weiterhin über einen Sensor oder ein OCR-System eine Kennzeichnung des mobilen Tanks erkannt und entsprechend den Vorgaben in einem Computerprogramm mittels einer Maschine zur Kennzeichnung von mobilen Tanks, wie beispielsweise einer Etikettiermaschine, Labels oder Warntafeln angebracht oder alte Labels oder Warntafeln entfernt bzw. verdeckt werden. Die Kennzeichnung kann insbesondere eine Gefahrgutkennzeichnung sein. Hierdurch ist das System auch in der Lage die richtige und korrekte Gefahrgutkennzeichnung nach der Be- und/oder Entladung am mobilen Tank anzubringen.

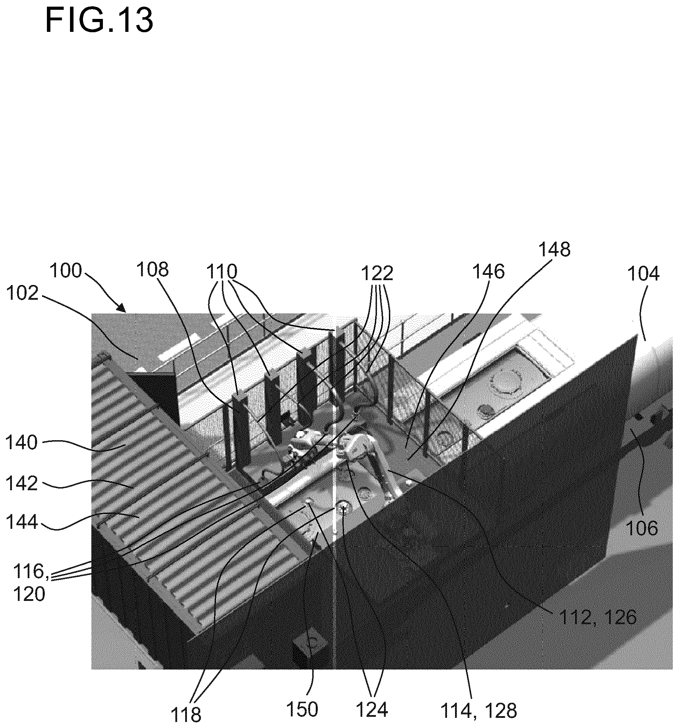

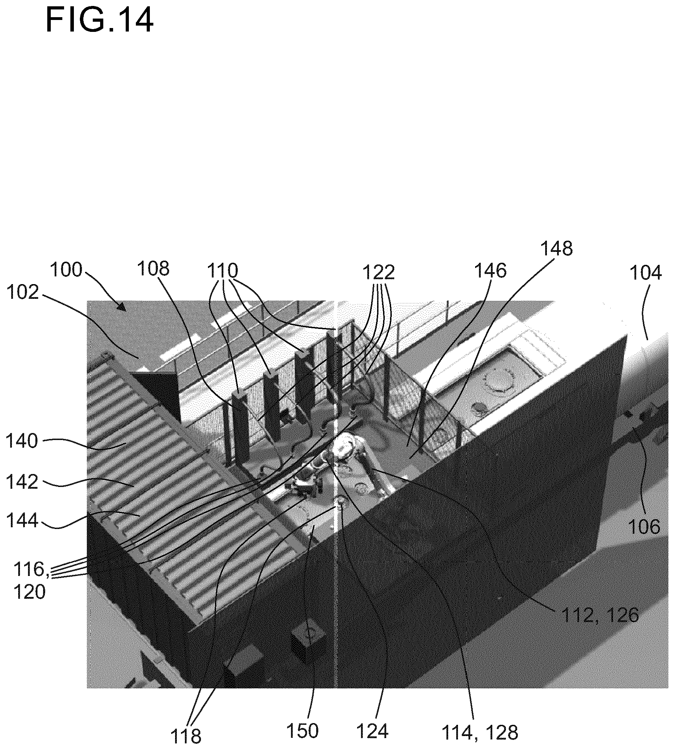

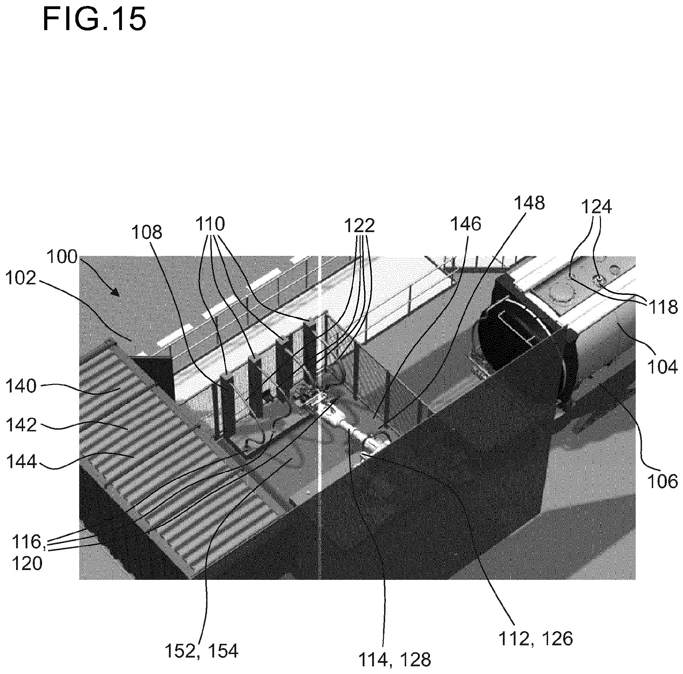

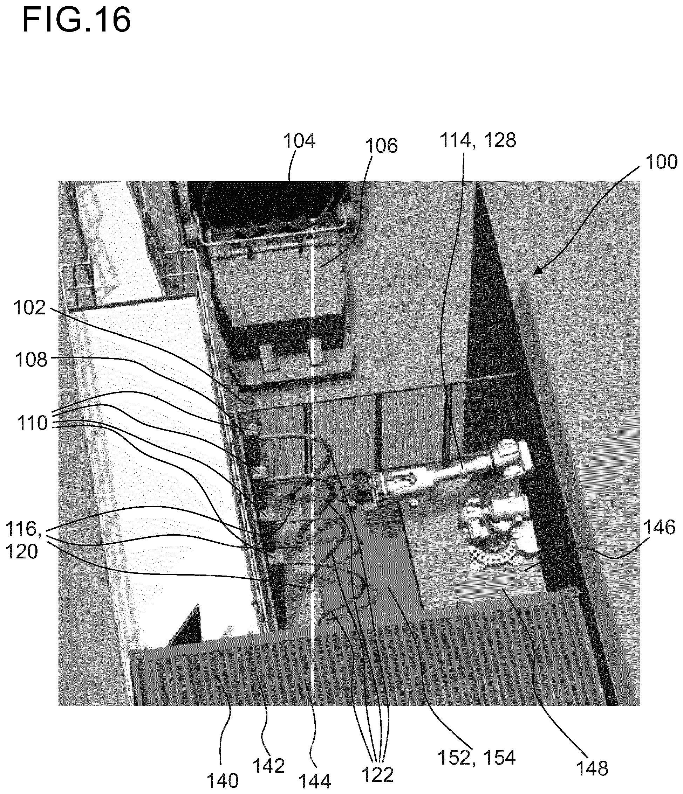

Nach dem Be- oder Entladevorgang wird der Rohranschluss 110 und das Kupplungssystem 116 wieder von dem Tankstutzen 118 mittels des Roboterarms 128 entfernt, wie in Figur 13 dargestellt ist. Der Tankstutzen 118 wird wieder mit dem Deckel 124 verschlossen, wie in Figur 14 dargestellt ist. Nach dem Be- und/oder Entladen des mobilen Tanks 104 wird die Öffnung 150 der Plattform 146 mittels der Tür 152 geschlossen. Dies dient der Absturzsicherung. Außerdem kann der mobile Tank 104 von der Umschlagstelle 102 entfernt werden. Beispielsweise wird der mobile Tank 104 mittels eines führerlosen Flurförderfahrzeugs 106 von der Umschlagstelle 102 weg transportiert, wie in den Figuren 15 und 16 dargestellt ist.

### Bezugszeichenliste

- 100: Logistiksystem
- 102: Umschlagstelle
- 104: mobiler Tank
- 106: führerloses Flurförderfahrzeug
- 108: Rohrsystem
- 110: Rohranschluss
- 112: Bewegungssystem
- 114: Bewegungsarm
- 114': weiterer Bewegungsarm
- 116: Kupplungssystem
- 118: Tankstutzen
- 120: Kupplungsstück
- 122: Schlauch
- 124: Deckel
- 126: Robotersystem
- 128: Roboterarm
- 130: Tanksensor
- 132: Reinigungsvorrichtung
- 134: Sprühkopf
- 136: Reinigungsschlauch
- 138: Temperieranschluss
- 140: Überwachungsvorrichtung
- 142: Steuerung
- 144: Analysevorrichtung
- 146: Plattform
- 148: Boden
- 150: Öffnung
- 152: Tür
- 154: Schiebetür

## Patentansprüche

1. Logistiksystem (100) zum automatischen Umschlag mindestens eines fluiden Mediums, umfassend
a. mindestens eine Umschlagstelle (102), wobei die Umschlagstelle (102) eingerichtet ist, um mindestens einen Vorgang durchzuführen ausgewählt aus der Gruppe bestehend aus einem Beladen eines mobilen Tanks (104) mit dem fluiden Medium und einem Entladen des fluiden Mediums aus dem mobilen Tank (104), wobei die Umschlagstelle (102) mindestens ein Rohrsystem (108) mit mindestens einem Rohranschluss (110) aufweist; und
b. mindestens eine Steuerung (142), wobei die Steuerung (142) programmtechnisch eingerichtet ist, um mindestens eine Funktion des Logistiksystems (100) zu steuern; und
c. mindestens ein Bewegungssystem (112) mit mindestens einem Bewegungsarm (114) und einem automatischen Kupplungssystem (116), wobei der Bewegungsarm (114) zum Bewegen des Kupplungssystems (116) eingerichtet ist, wobei das automatische Kupplungssystem (116) eingerichtet ist, um mindestens einen Tankstutzen 118 des mobilen Tanks (104) automatisch zu öffnen, wobei das automatische Kupplungssystem (116) weiterhin eingerichtet ist, um den Rohranschluss (110) der Umschlagstelle (102) automatisch zu öffnen und wobei das automatische Kupplungssystem (116) weiterhin eingerichtet ist, um den Tankstutzen (118) und den Rohranschluss (110) fluidisch zu verbinden.

2. Logistiksystem (100) nach dem vorhergehenden Anspruch, wobei die Steuerung (142) eingerichtet ist, um die fluidische Verbindung zwischen dem Tankstutzen (118) und dem Rohranschluss (110) freizuschalten oder zu blockieren.

3. Logistiksystem (100) nach einem der vorhergehenden Ansprüche, weiterhin umfassend mindestens eine Analysevorrichtung (144) zur Erfassung mindestens eines Parameters des fluiden Mediums.

4. Logistiksystem (100) nach dem vorhergehenden Anspruch, wobei die Steuerung (142) eingerichtet ist, um den mindestens einen Parameter mit mindestens einer Vorgabe zu vergleichen und entsprechend dem Ergebnis des Vergleichs die fluidische Verbindung zwischen dem Tankstutzen (118) und dem Rohranschluss (110) freizuschalten oder zu blockieren.

5. Logistiksystem (100) nach einem der vorhergehenden Ansprüche, wobei die Steuerung (142) eingerichtet ist, um einen Bedarf eines Umschlags des fluiden Mediums zu erfassen, wobei die Steuerung (142) weiterhin eingerichtet ist, um entsprechend des Bedarfs automatisch mindestens einen mobilen Tank (104) für den Umschlag anzufordern und an der Umschlagstelle (102) bereitzustellen.

6. Logistiksystem (100) nach einem der vorhergehenden Ansprüche, wobei der Rohranschluss (110) mindestens einen Schlauch (122) umfasst, wobei der Schlauch (122) mit dem Kupplungssystem (116) verbunden oder verbindbar ist, wobei der Bewegungsarm (114) zum Greifen und zum Bewegen des Schlauchs (122) ausgebildet ist.

7. Logistiksystem (100) nach einem der beiden vorhergehenden Ansprüche, wobei der Bewegungsarm (114) zum Entfernen und/oder Anbringen eines Deckels (124) von und/oder auf dem Tankstutzen (118) des mobilen Tanks (104) ausgebildet ist.

8. Logistiksystem (100) nach einem der vorhergehenden Ansprüche, wobei die Umschlagstelle (102) weiterhin mindestens einen Tanksensor (130) umfasst, wobei der Tanksensor (130) eingerichtet ist eine Position und/oder Art des Tankstutzens (118) des mobilen Tanks (104) zu erfassen.

9. Logistiksystem (100) nach einem der vorhergehenden Ansprüche, wobei die Umschlagstelle (102) weiterhin mindestens eine Reinigungsvorrichtung (132) umfasst, wobei die Reinigungsvorrichtung (132) eingerichtet ist zum zumindest äußerlichen Reinigen des Tankstutzens (118) des mobilen Tanks (104).

10. Logistiksystem (100) nach einem der vorhergehenden Ansprüche, wobei die Umschlagstelle (102) weiterhin eingerichtet ist, um den mobilen Tank (104) zu temperieren, insbesondere zu heizen oder zu kühlen.

11. Logistiksystem (100) nach dem vorhergehenden Anspruch, wobei die Umschlagstelle (102) zum lösbaren Anschließen eines Temperieranschlusses (138) an den mobilen Tank (104) ausgebildet ist, wobei insbesondere das Bewegungssystem (112) zum lösbaren Anschließen des Temperieranschlusses (138) an den mobilen Tank (104) ausgebildet ist.

12. Logistiksystem (100) nach einem der vorhergehenden Ansprüche, wobei die Umschlagstelle (102) weiterhin mindestens eine Überwachungsvorrichtung (140) aufweist, wobei die Überwachungsvorrichtung (140) eingerichtet ist, um einen Beladungszustand des mobilen Tanks (104) zu überwachen.

13. Logistiksystem (100) nach einem der vorhergehenden Ansprüche, wobei das automatische Kupplungssystem (116) mindestens ein Kupplungsstück (120) aufweist, wobei das automatische Kupplungsstück (120) eingerichtet ist, den mindestens einen Tankstutzen (118) des mobilen Tanks (104) durch Aufsetzen des Kupplungsstücks (120) automatisch zu öffnen.

14. Logistiksystem (100) nach einem der vorhergehenden Ansprüche, wobei das Bewegungssystem (112) ein Robotersystem (126) ist, wobei der Bewegungsarm (114) ein Roboterarm (128) ist.

15. Verfahren zum Umschlag mindestens eines fluiden Mediums unter Verwendung mindestens eines Logistiksystems (100) nach einem der vorhergehenden Ansprüche, wobei das Verfahren umfasst:
i. Verbringung des mindestens einen mobilen Tanks (104) an die Umschlagstelle (102);
ii. automatisches Öffnen des mindestens einen Rohranschlusses (110) der Umschlagstelle (102) mittels des automatischen Kupplungssystems (116);
iii. automatisches Öffnen des mindestens einen Tankstutzens (118) des mobilen Tanks (104) mittels des automatischen Kupplungssystems (116);
iv. Herstellen mindestens einer fluidischen Verbindung zwischen dem Tankstutzen (118) und dem Rohranschluss (110) mittels des automatischen Kupplungssystems (116); und
v. Durchführen mindestens eines Vorgangs ausgewählt aus der Gruppe bestehend aus: einem Beladen des mobilen Tanks (104) mit dem fluiden Medium aus dem Rohrsystem (108) der Umschlagstelle (102); Entladen des fluiden Mediums aus dem mobilen Tank (104) in das Rohrsystem (108) der Umschlagstelle (102).

## Claims

1. Logistics system (100) for the automatic handling of at least one fluid medium, comprising
a. at least one transshipment point (102), wherein the transshipment point (102) is set up to perform at least one operation selected from the group consisting of loading a mobile tank (104) with the fluid medium and discharging the fluid medium from the mobile tank (104), wherein the transshipment point (102) comprises at least one pipe system (108) with at least one pipe connection (110) ; and
b. at least one controller (142), wherein the controller (142) is programmatically set up to control at least one function of the logistics system (100); and
C. at least one movement system (112) with at least one movement arm
(114) and an automatic coupling system (116), wherein the movement arm
(114) for moving the coupling system (116), wherein the automatic coupling system (116) is configured to automatically open at least one tank nozzle 118 of the mobile tank (104), wherein the automatic coupling system (116) is further configured to open the pipe connection (110) of the
(102) and the automatic coupling system (116) is still set up to fluidically connect the tank neck (118) and the pipe connection (110).

2. Logistics system (100) according to the preceding claim, wherein the control system (142)
is set up to unlock or block the fluidic connection between the tank neck (118) and the pipe connection (110).

3. Logistics system (100) according to any of the preceding claims, further comprising at least one analytical apparatus (144) for recording at least one parameter
of the fluid medium.

4. Logistics system (100) according to the preceding claim, wherein the control system (142) is set up to compare the at least one parameter with at least one specification and according to the result of the comparison the fluidic connection
between the fuel filler neck (118) and the pipe connection (110).

5. Logistics system (100) according to one of the preceding requirements, wherein the control system (142) in order to assess a need for a turnover of the fluid medium.
whereby the control system (142) is still set up to automatically request at least one mobile tank (104) for transhipment and make it available at the transshipment point (102) according to demand.

6. Logistics system (100) according to any of the preceding claims, wherein the pipe connection (110) comprises at least one hose (122), wherein the hose (122) is connected or connectable to the coupling system (116), wherein the movement arm
(114) is designed to grip and move the hose (122).

7. Logistics system (100) according to one of the two preceding claims, wherein the moving arm (114) is designed for removing and/or affixing a cover (124) from and/or on the tank neck (118) of the mobile tank (104).

8. Logistics system (100) according to any of the preceding claims, wherein the transshipment point (102) further comprises at least one tank sensor (130), wherein the tank sensor (130), a position and/or type of the tank neck (118) of the mobile tank (104) is to be recorded.

9. Logistics system (100) according to any of the preceding claims, wherein the transshipment point (102) further comprises at least one tank sensor (130), wherein the tank sensor (130), a position and/or type of the tank neck (118) of the mobile tank (104) is to be recorded.

10. Logistics system (100) according to one of the preceding claims, wherein the transshipment point (102) is still set up to temper the mobile tank (104), in particular to heat or cool it.

11. Logistics system (100) in accordance with the preceding claim, wherein the transshipment point
(102) For detachable connection of a temperature connection (138) to the mobile tank (104), whereby in particular the motion system (112) is designed for the detachable connection of the temperature connection (138) to the mobile tank (104).

12. Logistics system (100) in accordance with any of the preceding claims, wherein the transhipment (102) continues to have at least one monitoring device (140), wherein the monitoring device (140) is equipped to monitor a loading condition of the mobile tank (104).

13. Logistics system (100) according to one of the preceding requirements, whereby the automatic
coupling system (116) has at least one coupling piece (120), wherein the automatic coupling piece (120) is set up, which has at least one fuel nozzle
(118) of the mobile tank (104) by attaching the coupling piece (120).

14. Logistics system (100) according to any of the preceding claims, wherein the motion system (112) is a robotic system (126), wherein the motion arm (114) is a robotic arm (128).

15. A method for handling at least one fluid medium using at least one logistics system (100) according to any of the preceding claims, wherein the method comprises:
i. Movement of at least one mobile tank (104) to the transshipment point
(102);
ii. automatic opening of at least one pipe connection (110) of the transshipment point (102) by means of the automatic coupling system (116) ;
iii. Automatic opening of at least one tank neck (118) of the mobile tank
(104) by means of the automatic coupling system (116) ;
iv. Establishing at least one fluidic connection between the tank nozzle
(118) and the pipe connection (110) by means of the automatic coupling system (116) ; and
v. Carrying out at least one operation selected from the group consisting of : a loading of the mobile tank (104) with the fluid medium from the
Pipe system (108) of the transshipment point (102) ; Discharge of the fluid medium from the mobile tank (104) into the pipe system (108) of the transshipment point (102).

## Revendications

1. Système logistique (100) pour la manipulation automatique d'au moins un milieu fluide, comprenant
a. au moins un point de transbordement (102), où le point de transbordement (102) est configuré pour effectuer au moins une opération sélectionnée parmi le groupe consistant à charger un réservoir mobile (104) avec le milieu fluide et à décharger le milieu fluide depuis le réservoir mobile (104), où le point de transbordement (102) comprend au moins un système de tuyauterie (108) avec au moins un système de tuyau
Conclusion (110) ; et
b. au moins un contrôleur (142), dans lequel le contrôleur (142) est programmatiquement configuré pour contrôler au moins une fonction du système logistique (100) ; et
c. au moins un système de mouvement (112) avec au moins un bras de mouvement (114) et un système d'accouplement automatique (116), dans lequel le bras de mouvement (114) pour déplacer le système d'accouplement (116), où le système d'accouplement automatique (116) est configuré pour ouvrir automatiquement au moins une buse de réservoir 118 du réservoir mobile (104), tandis que le système d'accouplement automatique (116) est en outre configuré pour ouvrir la connexion de tuyau (110) de la
(102) et le système d'accouplement automatique (116) est toujours configuré pour relier fluidement le col du réservoir (118) et la connexion de tuyau (110).

2. Système logistique (100) selon la revendication précédente, dans lequel le système de contrôle (142) est configuré pour déverrouiller ou bloquer la connexion fluidique entre le col du réservoir (118) et la connexion du tuyau (110).

3. système logistique (100) selon l'une des revendications précédentes, comprenant en outre au moins un appareil analytique (144) permettant d'enregistrer au moins un paramètre du milieu fluide.

4. Le système logistique (100) selon l'affirmation précédente, dans lequel le système de contrôle (142) est configuré pour comparer au moins un paramètre avec au moins une spécification et, selon le résultat de la comparaison, la connexion fluidique entre le col du remplissage de carburant (118) et la connexion du tuyau (110).

5. système logistique (100) selon l'une des exigences précédentes, dans laquelle le système
de contrôle(142) afin d'évaluer le besoin d'un renouvellement du milieu fluide. le système de contrôle (142) est toujours configuré pour demander automatiquement au moins un réservoir mobile (104) à transborder et le rendre disponible au point de transbordement (102) selon la demande.

6. Système logistique (100) selon l'une des affirmations précédentes, où la connexion de tuyau (110) comprend au moins un tuyau (122), où le tuyau (122) est connecté ou connectable au système de raccord (116), où le bras de mouvement (114) est conçu pour saisir et déplacer le tuyau (122).

7. Un système logistique (100) selon l'une des deux revendications précédentes, dans lequel le bras mobile (114) est conçu pour retirer et/ou fixer un couvercle (124) depuis et/ou sur le col du réservoir (118) du char mobile (104).

8. système logistique (100) selon n'importe laquelle des revendications précédentes, où le point de transbordement (102) comprend en outre au moins un capteur de réservoir (130), où le capteur de réservoir
(130), une position et/ou type du col du char (118) du char mobile (104) doit être enregistrée.

9. Système logistique (100) selon l'une des revendications précédentes, où le point de transbordement (102) comprend en outre au moins un dispositif de nettoyage (132), où le dispositif de nettoyage (132) est équipé pour au moins un certain nettoyage du col du réservoir (118) du réservoir mobile (104).

10. Système logistique (100) selon l'une des revendications précédentes, où le point de transbordement (102) est encore configuré pour tempérer le réservoir mobile (104), en particulier pour le chauffer ou le refroidir.

11. (100) conformément à la revendication précédente, où le point de transbordement (102) Pour la connexion détachable d'une connexion de température (138) au réservoir mobile (104), par lequel en particulier le système de mouvement (112) est conçu pour la connexion détachable de la connexion de température (138) au réservoir mobile (104).

12. système (100) conformément à l'une des revendications précédentes, dans laquelle le transbordement
(102) continue de disposer d'au moins un dispositif de surveillance (140), dans lequel le dispositif de surveillance (140) est équipé pour surveiller l'état de charge du réservoir mobile (104).

13. système logistique (100) selon l'une des exigences précédentes, selon laquelle l'automatique Le système d'accouplement (116) comporte au moins une pièce d'accouplement (120), dans laquelle est installée la pièce d'accouplement automatique (120), qui possède au moins une buse de carburant
(118) du réservoir mobile (104) en fixant la pièce d'accouplement (120).

14. Système logistique (100) selon l'une des affirmations précédentes, où le système de mouvement (112) est un système robotique (126), où le bras de mouvement (114) est un bras robotique (128).

15. Une méthode pour manipuler au moins un milieu fluide utilisant au moins un système logistique (100) selon l'une des affirmations précédentes, dans laquelle la méthode comprend :
i. Mouvement d'au moins un réservoir mobile (104) vers le point de transbordement (102);
ii. ouverture automatique d'au moins une connexion de tuyau (110) du point de transbordement (102) au moyen du système d'accouplement automatique (116) ;
iii. Ouverture automatique d'au moins un col de char (118) du char mobile (104) au moyen du système d'accouplement automatique (116) ;
iv. Établir au moins une connexion fluidique entre la buse du réservoir (118) et la connexion de tuyauterie (110) au moyen du système d'accouplement automatique (116) ; et
v. Réalisation d'au moins une opération sélectionnée parmi le groupe comprenant : un chargement du réservoir mobile (104) avec le milieu fluide de la Système de tuyauterie (108) du point de transbordement (102) ; Décharge du milieu fluide du réservoir mobile (104) dans le système de tuyaux (108) du point de transbordement (102).
